# EUROPEAN PATENT APPLICATION

(11) **EP 4 598 091 A1**
(43) Date of publication of application: **06.08.2025**
(21) Application number: 22959868.5
(22) Date of filing: 27.09.2022
(51) Int. Cl.: H04W 24/02

(54) **FREQUENCY HOPPING PROCESSING METHOD AND DEVICE**

(71) Applicant: Beijing Xiaomi Mobile Software Co., Ltd., Beijing 100085 (CN)
(72) Inventor: WANG, Lei, Beijing 100085 (CN)
(74) Representative: Stöckeler, Ferdinand
(86) International application number: PCT/CN2022/121879
(87) International publication number: WO 2024/065219

(57) **Abstract**

The present disclosure provides a frequency hopping processing method and device. The method comprises: receiving one or more first offsets configured by a base station for a terminal, the first offsets being available frequency domain offsets corresponding to two adjacent hops when the terminal transmits a PUSCH by means of frequency hopping within the range of frequency domain resources occupied by an uplink BWP; when the two adjacent hops are located in different time units in the time domain and the occupied frequency domain resources satisfy a specified condition, determining a target offset of the two adjacent hops at least on the basis of the first offsets; and on the basis of the target offset, transmitting the PUSCH to the base station by means of frequency hopping within the different time units. The present disclosure achieves the purpose of transmitting a PUSCH by means of frequency hopping within different time units, ensures that a frequency domain resource occupied by a terminal side when transmitting the PUSCH by means of frequency hopping would not exceed the range of frequency domain resources occupied by an uplink BWP or an uplink subband, improves the transmission performance of an uplink channel, and improves the feasibility of full-duplex communication.

## Description

### TECHNICAL FIELD

The disclosure relates to the field of communication technologies, and in particular, to a frequency hopping processing method and apparatus.

### BACKGROUND

The Release 18 (Rel-18) full duplex enhancement project will study the full duplex scheme, specifically, the network side can simultaneously receive and transmit data in one slot. In order to achieve full duplex operation, the base station side needs to configure the uplink (UL) subband for the terminal on the downlink (DL) symbol.

Currently, terminals support sending Physical Uplink Shared Channel (PUSCH) through Frequency Hopping (FH) to obtain frequency diversity gain and improve the transmission performance of the uplink channel. However, there is no relevant solution when the terminal uses inter slot frequency hopping to send PUSCH.

### SUMMARY

In order to overcome problems existing in the related art, embodiments of the present disclosure provide a method and a frequency hopping processing apparatus.

According to a first aspect of embodiments of the present disclosure, a frequency hopping processing method is provided. the method is performed by a terminal, and includes:

receiving one or more first offsets configured by a base station for the terminal, wherein the first offset is an available frequency domain offset corresponding to two adjacent hops when the terminal transmits a physical uplink shared channel (PUSCH) using frequency hopping within a frequency domain resource range occupied by an uplink bandwidth part (BWP);

in a case where the two adjacent hops are in different time units in a time domain and frequency domain resources occupied meet a specified condition, determining a target offset of the two adjacent hops at least based on the one or more first offsets;

transmitting the PUSCH to the base station using frequency hopping in the different time units, based on the target offset.

According to a second aspect of embodiments of the present disclosure, a frequency hopping processing method is provided. The method is performed by a base station, and includes:
configuring one or more first offsets for a terminal, wherein the first offset is an available frequency domain offset corresponding to two adjacent hops when the terminal transmits a physical uplink shared channel (PUSCH) using frequency hopping within a frequency domain resource range occupied by an uplink bandwidth part (BWP);
in a case where the two adjacent hops are in different time units in a time domain and frequency domain resources occupied meet a specified condition, determining a target offset of the two adjacent hops at least based on the one or more first offsets;
receiving the PUSCH transmitted by the terminal using frequency hopping in the different time units, based on the target offset.

According to a third aspect of embodiments of the present disclosure, a frequency hopping processing apparatus is provided. The apparatus is applied in a terminal, and includes:
a first receiving module, configured to receive one or more first offsets configured by a base station for the terminal, wherein the first offset is an available frequency domain offset corresponding to two adjacent hops when the terminal transmits a physical uplink shared channel (PUSCH) using frequency hopping within a frequency domain resource range occupied by an uplink bandwidth part (BWP);
a first frequency hopping processing module, configured to, in a case where the two adjacent hops are in different time units in a time domain and frequency domain resources occupied meet a specified condition, determine a target offset of the two adjacent hops at least based on the one or more first offsets;
a sending module, configured to transmit the PUSCH to the base station using frequency hopping in the different time units, based on the target offset.

According to a fourth aspect of embodiments of the present disclosure, a frequency hopping processing apparatus is provided. The apparatus is applied in a base station, and includes:
an executing module, configured to configure one or more first offsets for a terminal, wherein the first offset is an available frequency domain offset corresponding to two adjacent hops when the terminal transmits a physical uplink shared channel (PUSCH) using frequency hopping within a frequency domain resource range occupied by an uplink bandwidth part (BWP);
a second frequency hopping processing module, configured to, in a case where the two adjacent hops are in different time units in a time domain and frequency domain resources occupied meet a specified condition, determine a target offset of the two adjacent hops at least based on the one or more first offsets;
a second receiving module, configured to receive the PUSCH transmitted by the terminal using frequency hopping in the different time units, based on the target offset.

According to a fifth aspect of embodiments of the present disclosure, a frequency hopping processing apparatus is provided, including:
a processor; and
a memory, configured to store instructions executable by the processor;
wherein the processor is configured to execute the frequency hopping processing method on the terminal side described above.

According to a sixth aspect of embodiments of the present disclosure, a frequency hopping processing apparatus is provided, including:
a processor; and
a memory, configured to store instructions executable by the processor;
wherein the processor is configured to execute the frequency hopping processing method on the base station side described above.

The technical solution provided by embodiments of the present disclosure may include the following beneficial effects.

In embodiments of the present disclosure, the base station can configure one or more first offsets for the terminal. The first offset is the available frequency domain offset corresponding to two adjacent hops when the terminal transmits PUSCH using frequency hopping within the frequency domain resource range occupied by the uplink BWP. When the two adjacent hops are in different time units in the time domain and the occupied frequency domain resources meet the specified condition, the terminal can determine the target offset of the two adjacent hops at least based on the first offsets, and then transmit the PUSCH to the base station using frequency hopping in different time units based on the target offset. This disclosure achieves the purpose of using frequency hopping to transmit PUSCH in different time units, ensuring that the frequency domain resources occupied by the terminal side during frequency hopping transmission of PUSCH do not exceed the frequency domain resource range occupied by the uplink BWP or uplink subband, improving the transmission performance of the uplink channel and enhancing the feasibility of full duplex communication.

It should be understood that the above general description and the subsequent detailed description are only exemplary and explanatory, and cannot limit the disclosure.

### BRIEF DESCRIPTION OF THE DRAWINGS

The accompanying drawings are incorporated into the specification and form a part of the specification, illustrating embodiments in accordance with the present application and used together with the specification to explain the principles of the present application.
Fig. 1 is a schematic flowchart of a frequency hopping processing method according to an exemplary embodiment.
Fig. 2 is a schematic flowchart of another frequency hopping processing method according to an exemplary embodiment.
Fig. 3A is a schematic flowchart of another frequency hopping processing method according to an exemplary embodiment.
Fig. 3B is a schematic flowchart of another frequency hopping processing method according to an exemplary embodiment.
Fig. 4 is a schematic flowchart of another frequency hopping processing method according to an exemplary embodiment.
Fig. 5 is a schematic flowchart of another frequency hopping processing method according to an exemplary embodiment.
Fig. 6 is a schematic flowchart of another frequency hopping processing method according to an exemplary embodiment.
Fig. 7A is a schematic flowchart of another frequency hopping processing method according to an exemplary embodiment.
Fig. 7B is a schematic flowchart of another frequency hopping processing method according to an exemplary embodiment.
Fig. 8 is a schematic flowchart of another frequency hopping processing method according to an exemplary embodiment.
Figs. 9A to 9C are schematic diagrams of time slot structures for frequency hopping processing according to an exemplary embodiment.
Fig. 10 is a block diagram of a frequency hopping processing apparatus according to an exemplary embodiment.
Fig. 11 is a block diagram of another frequency hopping processing apparatus according to an exemplary embodiment.
Fig. 12 is a block diagram of a frequency hopping processing apparatus according to an exemplary embodiment.
Fig. 13 is a block diagram of another frequency hopping processing apparatus according to an exemplary embodiment.

### DETAILED DESCRIPTION

The exemplary embodiments will be described in detail here, with examples shown in the accompanying drawings. When referring to the accompanying drawings, unless otherwise indicated, the same numbers in different drawings represent the same or similar elements. The implementations described in the following exemplary embodiments do not represent all implementations consistent with the embodiments of the present disclosure. On the contrary, they are only examples of devices and methods consistent with some aspects of the embodiments of the present disclosure as described in the accompanying claims.

The terms used in embodiments of the present disclosure are only for the purpose of describing specific embodiments and are not intended to limit the embodiments of the present disclosure. The singular forms of "a" and "the" used in this disclosure and the accompanying claims are also intended to include the majority form, unless the context clearly indicates otherwise. It should also be understood that the term "and/or" used in this article refers to and includes any or all possible combinations of one or more associated listed items.

It should be understood that although various information may be described using terms such as first, second, third, etc. in this disclosure, such information should not be limited to these terms. These terms are only used to distinguish information for the same type from each other. For example, without departing from the scope of this disclosure, the first information can also be referred to as the second information, and similarly, the second information can also be referred to as the first information. Depending on the context, the word "if" used here can be interpreted as "when...... " or "in a case where... ..." or "in response to determining ... ...".

Currently, when a terminal uses inter-slot FH to transmit PUSCH, and the first hop is located in the normal UL BWP and the second hop is located within the UL subband, and the frequency domain range and/or the number of resources occupied by the normal UL BWP and UL subband are different, it will cause the hop to exceed the UL subband.

When the terminal uses inter-slot FH to transmit PUSCH, and the first hop is located within the UL subband and the second hop is located in the normal UL BWP, and the frequency domain range and/or the number of resources occupied by the normal UL BWP and UL subband are different, it will cause hop to exceed the normal UL BWP.

In order to solve the above problems, the present disclosure provides the following frequency hopping processing method. In the following, the frequency hopping processing method provided in this disclosure will be introduced first from the terminal side.

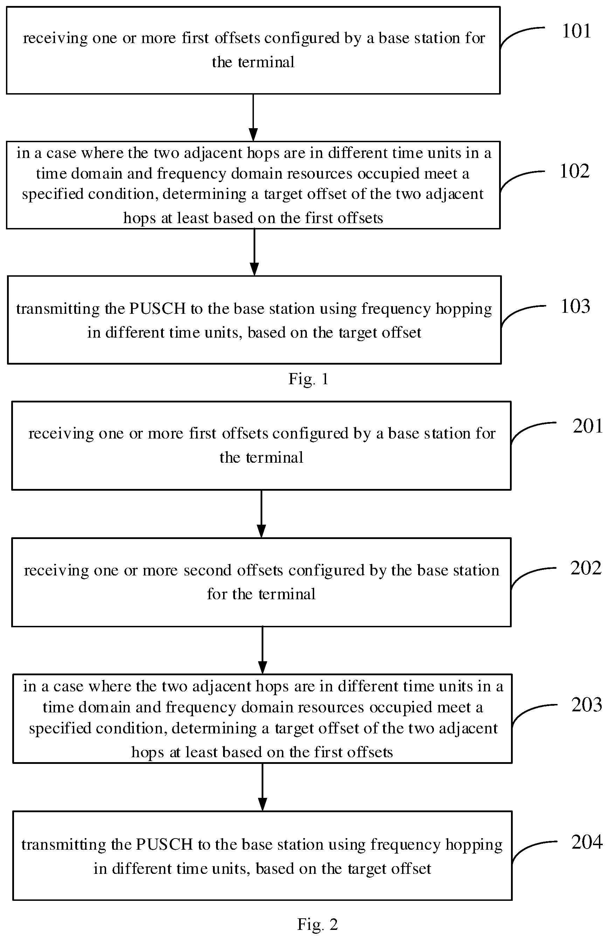

Embodiments of the present disclosure provide a frequency hopping processing method. As shown in Fig. 1, which is a flowchart of a frequency hopping processing method according to an embodiment, the method can be performed by a terminal. The method may include the following steps.

In step 101, one or more first offsets configured by a base station for the terminal are received.

In an embodiment of the present disclosure, the first offset is an available frequency domain offset corresponding to two adjacent hops when the terminal transmits a Physical Uplink Shared Channel (PUSCH) using frequency hopping within a frequency domain resource range occupied by an uplink bandwidth part (BWP).

It should be noted that the first offset in this disclosure refers to the number of RBs (resource blocks) spaced between the starting RBs of adjacent hops.

In a possible implementation, the uplink BWP is configured by the base station for the terminal on the uplink time unit or flexible time unit.

For example, if the base station configures the transmission direction of a certain time unit as uplink through common time division duplex configuration (tdd-UL-DL-Configurationcommon), then that time unit is the uplink time unit. Furthermore, the uplink BWP can be located within that uplink time unit in the time domain.

For another example, if the base station configures the transmission direction of a certain time unit as flexible through tdd-UL-DL-ConfigurationCommon, then that time unit is a flexible time unit. Furthermore, the base station indicates its transmission direction as uplink through dedicated time division duplex configuration (tdd-UL-DL-ConfigurationDedicated), and the uplink BWP can be located within that time unit in the time domain.

In a possible implementation, the base station can notify the one or more first offsets configured for the terminal in the form of a list, such as a frequency hopping offset list for uplink BWP, which includes one or more first offsets.

In a possible implementation, the base station can notify the one or more first offsets configured for the terminal through Radio Resource Control (RRC) signaling.

The above are only illustrative examples, and other methods used by the base station to notify the one or more offsets configured for the terminal should be within the scope of protection of this disclosure.

In step 102, in a case where the two adjacent hops are in different time units in the time domain and frequency domain resources occupied meet a specified condition, a target offset of the two adjacent hops is determined at least based on the first offsets.

In an embodiment of the present disclosure, the two adjacent hops may be in different time units in the time domain, and the time units in this disclosure may be in units of slots, symbols, spans, etc., which is not limited in this disclosure. One span includes multiple consecutive symbols.

Further, the frequency domain resources occupied by the two adjacent hops can meet the specified condition. Specifically, the specified condition includes any one of the following: the two adjacent hops respectively occupying frequency domain resources of the uplink subband and frequency domain resources of the uplink BWP, wherein the uplink subband is in the first time unit in the time domain, and the transmission direction of information on the uplink subband is different from a transmission direction of information within the first time unit; or, the two adjacent hops occupying the frequency domain resources of the uplink subband; or the two adjacent hops occupying the frequency domain resources of the uplink BWP.

In a possible implementation, the two adjacent hops are in different time units in the time domain, occupying the frequency domain resources of the uplink subband and the frequency domain resources of the uplink BWP respectively. Specifically, the first hop occupies the frequency domain resources of the uplink subband, the second hop occupies the frequency domain resources of the uplink BWP, or the first hop occupies the frequency domain resources of the uplink BWP and the second hop occupies the frequency domain resources of the uplink subband.

The uplink subband refers to a subband that is located within the first time unit in the time domain, and the transmission direction of information on the uplink subband is different from a transmission direction of information within the first time unit.

In an embodiment of the present disclosure, information includes but is not limited to signaling, signals, data, etc.

In embodiments of the present disclosure, the first time unit may be a Seamless Bidirectional Forwarding Detection (SBFD) time unit. The SBFD time unit is capable of transmitting information in different directions on this time unit.

For example, the SBFD time unit may be a downlink time unit containing an uplink subband, or a flexible time unit containing an uplink subband, or an uplink time unit containing a downlink subband, or a flexible time unit containing a downlink subband, which is not limited in this disclosure.

In another possible implementation, the two adjacent hops are in different time units in the time domain, and both the two adjacent hops occupy the frequency domain resources of the uplink subband.

In another possible implementation, the two adjacent hops are in different time units in the time domain, and both the two adjacent hops occupy the frequency domain resources of the uplink BWP.

When the two adjacent hops are in different time units in the time domain and the occupied frequency domain resources meet the specified condition, the terminal at least can determine the target offset of the two adjacent hops during inter-slot frequency hopping based on one or more first offsets configured by the base station.

In step 103, the PUSCH is transmitted to the base station using frequency hopping in different time units, based on the target offset.

In embodiments of the present disclosure, after determining the target offset, the terminal can perform inter-slot frequency hopping based on the target offset, that is, transmit the PUSCH to the base station using frequency hopping in different time units.

In the above embodiment, the purpose of using frequency hopping to transmit PUSCH in different time units has been achieved, ensuring that the frequency domain resources occupied by the terminal side during frequency hopping transmission of PUSCH will not exceed the frequency domain resource range occupied by the uplink BWP or uplink subband, improving the transmission performance of the uplink channel and the feasibility of full duplex communication.

In some optional embodiments, the terminal may determine the target offset using any of the following methods, but not limited to the following methods.

Method 1: the base station configures two independent sets of hopping offset lists for the terminal, namely dedicated hopping offset lists corresponding to the uplink BWP and uplink sub-band respectively.

Please refer to Fig. 2, which is a flowchart of a frequency hopping processing method according to an embodiment, the method can be performed by a terminal, and the method may include the following steps.

In step 201, one or more first offsets configured by a base station for the terminal are received.

In an embodiment of the present disclosure, the first offset is an available frequency domain offset corresponding to two adjacent hops when the terminal transmits PUSCH using frequency hopping within a frequency domain resource range occupied by an uplink BWP.

In a possible implementation, the uplink BWP is configured by the base station for the terminal on the uplink time unit or flexible time unit.

For example, if the base station configures the transmission direction of a certain time unit as uplink through tdd-UL-DL-Configurationcommon, then that time unit is the uplink time unit. Furthermore, the uplink BWP can be located within that uplink time unit in the time domain.

For another example, if the base station configures the transmission direction of a certain time unit as flexible through tdd-UL-DL-ConfigurationCommon, then that time unit is a flexible time unit. Furthermore, the base station indicates its transmission direction as uplink through tdd-UL-DL-ConfigurationDedicated, and the uplink BWP can be located within that time unit in the time domain.

In a possible implementation, the base station can notify the one or more first offsets configured for the terminal in the form of a list, such as a frequency hop offset list for uplink BWP, which includes one or more first offsets.

In a possible implementation, the base station can notify the one or more first offsets configured for the terminal through the RRC signaling.

The above are only illustrative examples, and other methods used by the base station to notify the one or more offsets configured for the terminal should be within the scope of protection of this disclosure.

In a possible implementation, the base station can configure one or more first offsets for the terminal according to a second number of resource blocks occupied by the uplink BWP.

For example, when the second number is less than 50, the base station can configure up to two first offsets for the terminal. When the second number is greater than or equal to 50, the base station can configure up to four first offsets for the terminal.

In step 202, one or more second offsets configured by the base station for the terminal are received.

In an embodiment of the present disclosure, the second offset is the available frequency domain offset corresponding to two adjacent hops when the terminal transmits PUSCH using frequency hopping within the frequency domain resource range occupied by the uplink subband. Optionally, the base station can notify the one or more second offsets configured for the terminal in a list format.

It should be noted that the second offset in this disclosure refers to the number of RBs spaced between the RBs of adjacent hops.

The uplink subband refers to a subband that is located within the first time unit in the time domain, and the transmission direction of information on the uplink subband is different from a transmission direction of information within the first time unit.

In an embodiment of the present disclosure, information includes but is not limited to signaling, signals, data, etc.

In embodiments of the present disclosure, the first time unit may be a SBFD time unit. The SBFD time unit is capable of transmitting information in different directions on this time unit.

For example, the SBFD time unit may be a downlink time unit containing an uplink subband, or a flexible time unit containing an uplink subband, or an uplink time unit containing a downlink subband, or a flexible time unit containing a downlink subband, which is not limited in this disclosure.

In an embodiment of the present disclosure, the base station configures a UL BWP dedicated list and an uplink subband dedicated list for the terminal. The UL BWP dedicated list may include one or more first offsets, and the uplink subband dedicated list may include one or more second offsets.

In a possible implementation, the base station may notify the one or more second offsets configured for the terminal through RRC signaling.

Optionally, the base station can notify the one or more first offsets and one or more second offsets configured for the terminal through the same or different RRC signaling.

In a possible implementation, the base station can configure one or more second offsets for the terminal based on the first number of RBs occupied by the uplink subband.

For example, when the first number is less than 50, the base station can configure up to two second offsets for the terminal. When the first number is greater than or equal to 50, the base station can configure up to four second offsets for the terminal.

In step 203, in a case where the two adjacent hops are in different time units in the time domain and occupied frequency domain resources meet a specified condition, a target offset of the two adjacent hops is determined at least based on the first offsets.

In an embodiment of the present disclosure, the two adjacent hops may be in different time units in the time domain, and the time units in this disclosure may be in units of slots, symbols, spans, etc., which is not limited in this disclosure. One span includes multiple consecutive symbols.

Further, the frequency domain resources occupied by the two adjacent hops can meet the specified condition. Specifically, the specified condition includes any one of the following: the two adjacent hops respectively occupying frequency domain resources of the uplink subband and frequency domain resources of the uplink BWP, wherein the uplink subband is in the first time unit in the time domain, and the transmission direction of information on the uplink subband is different from a transmission direction of information within the first time unit; or, the two adjacent hops occupying the frequency domain resources of the uplink subband; or the two adjacent hops occupying the frequency domain resources of the uplink BWP.

In a possible implementation, the two adjacent hops are in different time units in the time domain, occupying the frequency domain resources of the uplink subband and the frequency domain resources of the uplink BWP respectively. Specifically, the first hop occupies the frequency domain resources of the uplink subband, the second hop occupies the frequency domain resources of the uplink BWP, or the first hop occupies the frequency domain resources of the uplink BWP and the second hop occupies the frequency domain resources of the uplink subband.

The uplink subband refers to a subband that is located within the first time unit in the time domain, and the transmission direction of information on the uplink subband is different from a transmission direction of information within the first time unit.

In an embodiment of the present disclosure, information includes but is not limited to signaling, signals, data, etc.

In embodiments of the present disclosure, the first time unit may be a SBFD time unit. The SBFD time unit is capable of transmitting information in different directions on this time unit.

For example, the SBFD time unit may be a downlink time unit containing an uplink subband, or a flexible time unit containing an uplink subband, or an uplink time unit containing a downlink subband, or a flexible time unit containing a downlink subband, which is not limited in this disclosure.

In another possible implementation, the two adjacent hops are in different time units in the time domain, and both the two adjacent hops occupy the frequency domain resources of the uplink subband.

In another possible implementation, the two adjacent hops are in different time units in the time domain, and both the two adjacent hops occupy the frequency domain resources of the uplink BWP.

When the two adjacent hops are in different time units in the time domain and the occupied frequency domain resources meet the specified condition, the terminal can determine the target offset jointly based on the first offsets and the second offsets.

In a possible implementation, in response to determining that a latter hop of the two adjacent hops occupies the frequency domain resources of the uplink subband, one of the second offsets is determined as the target offset based on a protocol agreement.

In an embodiment of the present disclosure, the terminal may sequentially select one of the second offsets as the target offset in accordance with the protocol agreement.

In another possible implementation, in response to determining that a latter hop of the two adjacent hops occupies the frequency domain resources of the uplink subband, the second offset scheduled by the base station is determined as the target offset.

In an embodiment of the present disclosure, the base station may use the Frequency Domain Resource Allocation (FDRA) field in the downlink control information (DCI) to indicate the second offset scheduled for the terminal, and the terminal may use the second offset scheduled by the base station as the target offset.

In another possible implementation, in response to determining that a latter hop of the two adjacent hops occupies the frequency domain resources of the uplink BWP, one of the first offsets is determined as the target offset based on a protocol agreement.

In an embodiment of the present disclosure, the terminal may sequentially select one of the first offsets as the target offset in accordance with the protocol agreement.

In another possible implementation, in response to determining that a latter hop of the two adjacent hops occupies the frequency domain resources of the uplink BWP, the first offset scheduled by the base station is determined as the target offset.

In an embodiment of the present disclosure, the base station may use the FDRA field in the DCI to indicate the first offset scheduled for the terminal, and the terminal may use the first offset scheduled by the base station as the target offset.

In step 204, the PUSCH is transmitted to the base station using frequency hopping in different time units, based on the target offset.

In embodiments of the present disclosure, after determining the target offset, the terminal can perform inter-slot frequency hopping based on the target offset, that is, transmit the PUSCH to the base station using frequency hopping in different time units.

In the above embodiment, the base station configures the offsets used for frequency hopping transmission of PUSCH for the uplink subband and uplink BWP separately for the terminal, achieving the purpose of using frequency hopping to transmit PUSCH in different time units, ensuring that the frequency domain resources occupied by the terminal side during frequency hopping transmission of PUSCH will not exceed the frequency domain resource range occupied by the uplink BWP or uplink subband, improving the transmission performance of the uplink channel, and enhancing the feasibility of full duplex communication.

Method 2-1: the terminal does not expect the first offsets configured by the base station to cause frequency hopping transmission to exceed the frequency domain range of the uplink subband.

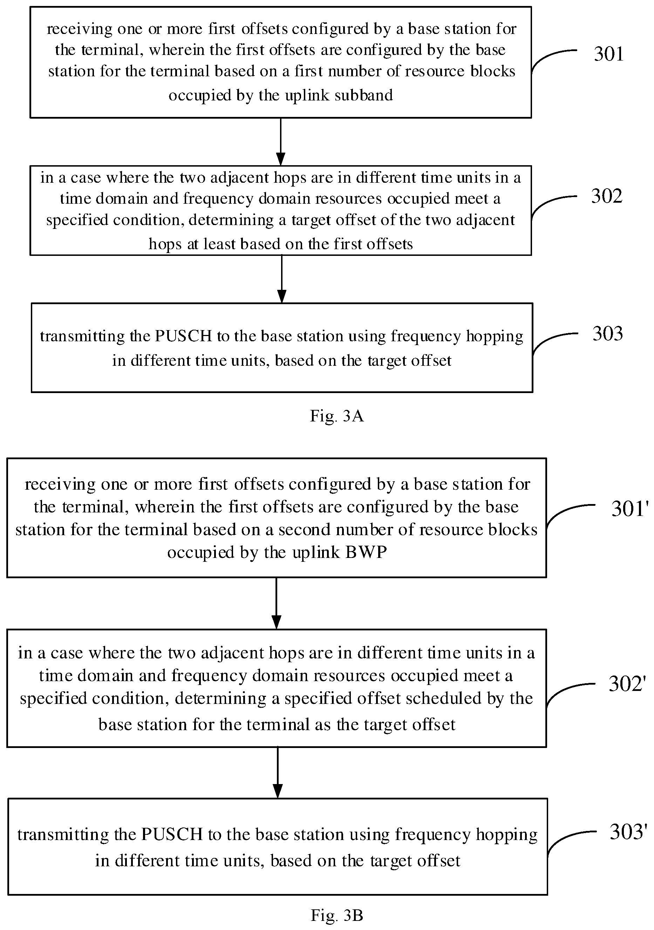

Please refer to Fig. 3A, which is a flowchart of a frequency hopping processing method according to an embodiment, the method can be performed by a terminal, and the method may include the following steps.

In step 301, one or more first offsets configured by a base station for the terminal are received, wherein the first offsets are configured by the base station for the terminal based on a first number of resource blocks occupied by the uplink subband.

In the related art, the base station can configure the first offsets for the terminal based on the second number of resource blocks occupied by the uplink BWP. However, if two adjacent hops occupy the frequency domain resources of the uplink subband, or two adjacent hops occupy the frequency domain resources of the uplink subband and the uplink BWP respectively, the terminal directly selects one of the first offsets as the target offset, which may cause the frequency domain resources occupied by the terminal to exceed the frequency domain resource range occupied by the uplink subband when using frequency hopping to transmit PUSCH.

For example, in the case where two adjacent hops occupy the frequency domain resources of the uplink subband, and the base station configures the first offsets for the terminal based on the second number of resource blocks occupied by the uplink BWP according to relevant technologies, including: offset#1=15RBs, offset#2=30RBs, assuming that the first number of RBs occupied by the uplink subband is 20 RBs, it is evident that if the terminal chooses to perform frequency hopping processing based on offset#2, it will cause the frequency domain resources occupied by it during PUSCH transmission to exceed the frequency domain resource range occupied by the uplink subband.

Therefore, in an embodiment of the present disclosure, the base station may not configure the first offsets for the terminal according to the relevant technology, but configure the first offsets for the terminal based on the first number of resource blocks occupied by the uplink subband. This ensures that regardless of whether two adjacent hops occupy the frequency domain resources of the uplink subband and the uplink BWP respectively, or whether two adjacent hops occupy the frequency domain resources of the uplink subband or the uplink BWP, the frequency domain resources occupied by the terminal when using frequency hopping to transmit PUSCH based on the selected first offset will not exceed the frequency domain resource range occupied by the uplink subband or the uplink BWP.

For example, the base station configures the first offsets for the terminal based on the first number of resource blocks occupied by the uplink subband. Assuming that the first number of RBs occupied by the uplink subband is 20 RBs, the configured first offsets include offset#1=10RBs, offset#2=15RBs, obviously, if the terminal selects any one as the target offset for frequency hopping processing, it will not cause the frequency domain resources occupied by it during PUSCH transmission to exceed the frequency domain resource range occupied by the uplink subband.

It should be noted that the first offset in this disclosure refers to the number of RBs spaced between two adjacent hops. The first offset can still refer to the available frequency domain offset corresponding to two adjacent hops when the terminal transmits PUSCH using frequency hopping within the frequency domain resource range occupied by the uplink BWP. Even if at least one of the two adjacent hops occupies the frequency domain resources of the uplink subband, the terminal can still select one of the first offsets as the target offset for the two adjacent hops in that situation.

In a possible implementation, the uplink BWP is configured by the base station for the terminal on the uplink time unit or flexible time unit.

In an embodiment of the present disclosure, the base station directly configures the first offsets based on the first number of resource blocks occupied by the uplink subband configured for the terminal, ensuring that the frequency domain resources occupied by the hop scheduled based on the Physical Uplink Control Channel (PUCCH) on the terminal side are within the frequency domain resource range occupied by the uplink subband.

In a possible implementation, when the first number is less than 50, the base station can configure up to two first offsets for the terminal. When the first number is greater than or equal to 50, the base station can configure up to four first offsets for the terminal.

In a possible implementation, the base station can notify the one or more first offsets configured for the terminal in the form of a list, such as a frequency hopping offset list for uplink BWP, which includes one or more first offsets.

In a possible implementation, the base station can notify the one or more first offsets configured for the terminal through the RRC signaling.

In step 302, in a case where the two adjacent hops are in different time units in the time domain and frequency domain resources occupied meet the specified condition, the target offset of the two adjacent hops is determined at least based on the first offsets.

In an embodiment of the present disclosure, the two adjacent hops may be in different time units in the time domain, and the time units in this disclosure may be in units of slots, symbols, spans, etc., which is not limited in this disclosure. One span includes multiple consecutive symbols.

Further, the frequency domain resources occupied by the two adjacent hops can meet the specified condition. Specifically, the specified condition includes any one of the following: the two adjacent hops respectively occupying frequency domain resources of the uplink subband and frequency domain resources of the uplink BWP, wherein the uplink subband is in the first time unit in the time domain, and the transmission direction of information on the uplink subband is different from a transmission direction of information within the first time unit; or, the two adjacent hops occupying the frequency domain resources of the uplink subband; or the two adjacent hops occupying the frequency domain resources of the uplink BWP.

In a possible implementation, the two adjacent hops are in different time units in the time domain, occupying the frequency domain resources of the uplink subband and the frequency domain resources of the uplink BWP respectively. Specifically, the first hop occupies the frequency domain resources of the uplink subband, the second hop occupies the frequency domain resources of the uplink BWP, or the first hop occupies the frequency domain resources of the uplink BWP and the second hop occupies the frequency domain resources of the uplink subband.

The uplink subband refers to a subband that is located within the first time unit in the time domain, and the transmission direction of information on the uplink subband is different from a transmission direction of information within the first time unit.

In an embodiment of the present disclosure, information includes but is not limited to signaling, signals, data, etc.

In an embodiment of the present disclosure, the first time unit may be a SBFD time unit. The SBFD time unit is capable of transmitting information in different directions on this time unit.

For example, the SBFD time unit may be a downlink time unit containing an uplink subband, or a flexible time unit containing an uplink subband, or an uplink time unit containing a downlink subband, or a flexible time unit containing a downlink subband, which is not limited in this disclosure.

In another possible implementation, the two adjacent hops are in different time units in the time domain, and both the two adjacent hops occupy the frequency domain resources of the uplink subband.

In another possible implementation, the two adjacent hops are in different time units in the time domain, and both the two adjacent hops occupy the frequency domain resources of the uplink BWP.

When the two adjacent hops are in different time units in the time domain and the occupied frequency domain resources meet the specified condition, the terminal can determine the target offset based on the first offsets.

In a possible implementation, the terminal can select one of the first offsets as the target offset based on a protocol agreement.

In an embodiment of the present disclosure, the terminal may sequentially select one of the first offsets as the target offset in accordance with the protocol agreement.

In another possible implementation, the first offset scheduled by the base station is determined as the target offset.

In an embodiment of the present disclosure, the base station may use the FDRA field in the DCI to indicate the first offset scheduled for the terminal, and the terminal may use the first offset scheduled by the base station as the target offset.

In the case where two adjacent hops occupy the frequency domain resources of the uplink BWP, or two adjacent hops occupy the frequency domain resources of the uplink subband, or two adjacent hops occupy the frequency domain resources of the uplink subband and the uplink BWP respectively, the target offset can be determined from the first offsets, and it can be ensured that when using frequency hopping to transmit PUSCH, the frequency domain resources occupied will not exceed the frequency domain resource range occupied by the uplink subband or uplink BWP.

In step 303, the PUSCH is transmitted to the base station using frequency hopping in different time units, based on the target offset.

In an embodiment of the present disclosure, after determining the target offset, the terminal can perform inter-slot frequency hopping based on the target offset, that is, transmit the PUSCH to the base station using frequency hopping in different time units. Due to the fact that the base station determines the first offset s based on the first number of RBs occupied by the uplink subband when configuring the first offsets, regardless of whether any of the two adjacent hops occupy the frequency domain resources of the uplink BWP or the uplink subband, it can be ensured that the frequency domain resources occupied by each hop will not exceed the range of frequency domain resources occupied by the uplink BWP or the uplink subband.

In the above embodiment, the base station side can ensure through the configuration process of the first offsets that the frequency domain resources occupied by the terminal during frequency hopping transmission of PUSCH will not exceed the frequency domain resource range occupied by the uplink BWP or uplink subband, achieving the goal of using frequency hopping to transmit PUSCH in different time units, improving the transmission performance of the uplink channel, and enhancing the feasibility of full duplex communication.

Method 2-2: the base station ensures through scheduling that the frequency domain resources occupied by the terminal side during frequency hopping transmission of PUSCH will not exceed the frequency domain resource range occupied by the uplink BWP or uplink subband.

Please refer to Fig. 3B, which is a flowchart of a frequency hopping processing method according to an embodiment, the method can be performed by a terminal, and the method may include the following steps.

In step 301', one or more first offsets configured by a base station for the terminal are received, wherein the first offsets are configured by the base station for the terminal based on a second number of resource blocks occupied by the uplink BWP.

In an embodiment of the present disclosure, the first offset is the available frequency domain offset corresponding to two adjacent hops when the terminal transmits PUSCH using frequency hopping within the frequency domain resource range occupied by the uplink BWP.

It should be noted that the first offset in this disclosure refers to the number of RBs spaced between RBs of the two adjacent hops.

In a possible implementation, the uplink BWP is configured by the base station for the terminal on the uplink time unit or flexible time unit.

In an embodiment of the present disclosure, the base station can configure the first offsets based on the second number of resource blocks occupied by the uplink BWP configured for the terminal.

In a possible implementation, when the second number is less than 50, the base station can configure up to two first offsets for the terminal. When the second number is greater than or equal to 50, the base station can configure up to four first offsets for the terminal.

In a possible implementation, the base station can notify the one or more first offsets configured for the terminal in the form of a list, such as a frequency hopping offset list for uplink BWP, which includes one or more first offsets.

In a possible implementation, the base station can notify the one or more first offsets configured for the terminal through the RRC signaling.

In step 302', in a case where the two adjacent hops are in different time units in the time domain and frequency domain resources occupied meet the specified condition, a specified offset scheduled by the base station for the terminal is determined as the target offset.

In an embodiment of the present disclosure, the two adjacent hops may be in different time units in the time domain, and the time units in this disclosure may be in units of slots, symbols, spans, etc., which is not limited in this disclosure. One span includes multiple consecutive symbols.

Further, the frequency domain resources occupied by the two adjacent hops can meet the specified condition. Specifically, the specified condition includes any one of the following: the two adjacent hops respectively occupying frequency domain resources of the uplink subband and frequency domain resources of the uplink BWP, wherein the uplink subband is in the first time unit in the time domain, and the transmission direction of information on the uplink subband is different from a transmission direction of information within the first time unit; or, the two adjacent hops occupying the frequency domain resources of the uplink subband; or the two adjacent hops occupying the frequency domain resources of the uplink BWP.

In a possible implementation, the two adjacent hops are in different time units in the time domain, occupying the frequency domain resources of the uplink subband and the frequency domain resources of the uplink BWP respectively. Specifically, the first hop occupies the frequency domain resources of the uplink subband, the second hop occupies the frequency domain resources of the uplink BWP, or the first hop occupies the frequency domain resources of the uplink BWP and the second hop occupies the frequency domain resources of the uplink subband.

The uplink subband refers to a subband that is located within the first time unit in the time domain, and the transmission direction of information on the uplink subband is different from a transmission direction of information within the first time unit.

In an embodiment of the present disclosure, information includes but is not limited to signaling, signals, data, etc.

In an embodiment of the present disclosure, the first time unit may be a SBFD time unit. The SBFD time unit is capable of transmitting information in different directions on this time unit.

For example, the SBFD time unit may be a downlink time unit containing an uplink subband, or a flexible time unit containing an uplink subband, or an uplink time unit containing a downlink subband, or a flexible time unit containing a downlink subband, which is not limited in this disclosure.

In another possible implementation, the two adjacent hops are in different time units in the time domain, and both the two adjacent hops occupy the frequency domain resources of the uplink subband.

In another possible implementation, the two adjacent hops are in different time units in the time domain, and both the two adjacent hops occupy the frequency domain resources of the uplink BWP.

When the two adjacent hops are in different time units in the time domain and the occupied frequency domain resources meet the specified condition, the terminal can determine the target offset based on the specified offset scheduled by the base station.

In an embodiment of the present disclosure, the specified offset is one offset scheduled by the terminal in the first offsets based on the first number of resource blocks occupied by the uplink subband. By using the scheduling method on the base station side, it is ensured that the frequency domain resources occupied by the terminal side during frequency hopping transmission of PUSCH will not exceed the frequency domain resource range occupied by the uplink BWP or uplink subband.

In a possible implementation, the base station schedules the specified offset for the terminal through the FDRA field of the DCI, and the terminal determines the specified offset as the target offset.

In step 303', the PUSCH is transmitted to the base station using frequency hopping in different time units, based on the target offset.

In an embodiment of the present disclosure, after determining the target offset, the terminal can perform inter-slot frequency hopping based on the target offset, that is, transmit the PUSCH to the base station using frequency hopping in different time units.

Since the base station determines the first offset based on the second number of RBs occupied by the uplink BWP when configuring the first offsets, and subsequently schedules the specified offset in the first offsets for the terminal based on the first number of RBs occupied by the uplink BWP, regardless of whether any one of the two adjacent hops occupies the frequency domain resources of the uplink BWP or the frequency domain resources of the uplink subband, it can ensure that the frequency domain resources occupied by each hop will not exceed the frequency domain resource range occupied by the uplink BWP or the uplink subband.

In the above embodiment, the base station side can ensure through the scheduling process of the first offset that the frequency domain resources occupied by the terminal during frequency hopping transmission of PUSCH will not exceed the frequency domain resource range occupied by the uplink BWP or uplink subband, achieving the goal of using frequency hopping to transmit PUSCH in different time units, improving the transmission performance of the uplink channel, and enhancing the feasibility of full duplex communication.

Method 3: The terminal supports offsetting based on one or more first offsets configured for the base station to determine the target offset.

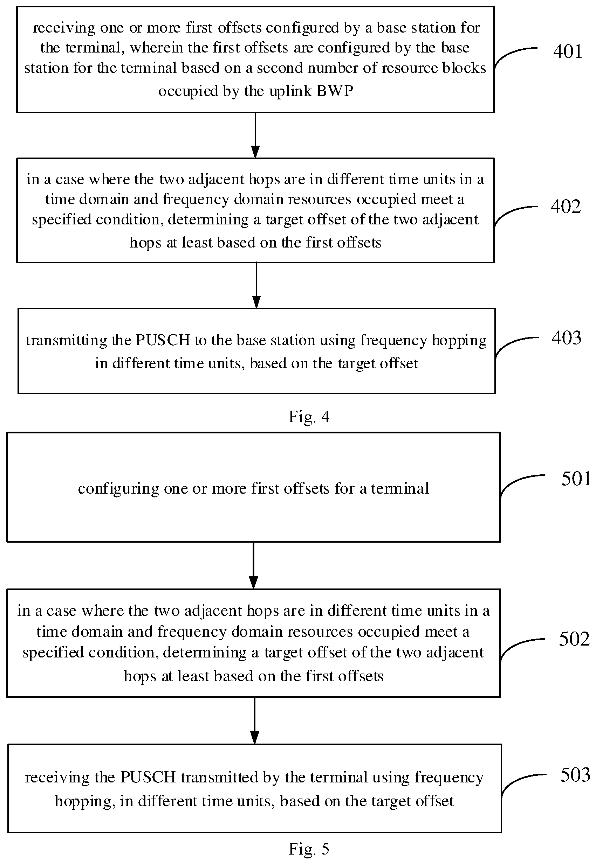

Please refer to Fig. 4, which is a flowchart of a frequency hopping processing method according to an embodiment, the method can be performed by a terminal, and the method may include the following steps.

In step 401, one or more first offsets configured by a base station for the terminal are received, wherein the first offsets are configured by the base station for the terminal based on a second number of resource blocks occupied by the uplink BWP.

In an embodiment of the present disclosure, the first offset is the available frequency domain offset corresponding to two adjacent hops when the terminal transmits PUSCH using frequency hopping within the frequency domain resource range occupied by the uplink BWP.

It should be noted that the first offset in this disclosure refers to the number of RBs spaced between RBs of the two adjacent hops.

In a possible implementation, the uplink BWP is configured by the base station for the terminal on the uplink time unit or flexible time unit.

In an embodiment of the present disclosure, the base station can configure the first offsets based on the second number of resource blocks occupied by the uplink BWP configured for the terminal.

In a possible implementation, when the second number is less than 50, the base station can configure up to two first offsets for the terminal. When the second number is greater than or equal to 50, the base station can configure up to four first offsets for the terminal.

In a possible implementation, the base station can notify the one or more first offsets configured for the terminal in the form of a list, such as a frequency hopping offset list for uplink BWP, which includes one or more first offsets.

In a possible implementation, the base station can notify the one or more first offsets configured for the terminal through the RRC signaling.

In step 402, in a case where the two adjacent hops are in different time units in the time domain and frequency domain resources occupied meet the specified condition, the target offset of the two adjacent hops is determined at least based on the first offsets.

In an embodiment of the present disclosure, the two adjacent hops may be in different time units in the time domain, and the time units in this disclosure may be in units of slots, symbols, spans, etc., which is not limited in this disclosure. One span includes multiple consecutive symbols.

Further, the frequency domain resources occupied by the two adjacent hops can meet the specified condition. Specifically, the specified condition includes any one of the following: the two adjacent hops respectively occupying frequency domain resources of the uplink subband and frequency domain resources of the uplink BWP, wherein the uplink subband is in the first time unit in the time domain, and the transmission direction of information on the uplink subband is different from a transmission direction of information within the first time unit; or, the two adjacent hops occupying the frequency domain resources of the uplink subband; or the two adjacent hops occupying the frequency domain resources of the uplink BWP.

In a possible implementation, the two adjacent hops are in different time units in the time domain, occupying the frequency domain resources of the uplink subband and the frequency domain resources of the uplink BWP respectively. Specifically, the first hop occupies the frequency domain resources of the uplink subband, the second hop occupies the frequency domain resources of the uplink BWP, or the first hop occupies the frequency domain resources of the uplink BWP and the second hop occupies the frequency domain resources of the uplink subband.

The uplink subband refers to a subband that is located within the first time unit in the time domain, and the transmission direction of information on the uplink subband is different from a transmission direction of information within the first time unit.

In an embodiment of the present disclosure, information includes but is not limited to signaling, signals, data, etc.

In an embodiment of the present disclosure, the first time unit may be a SBFD time unit. The SBFD time unit is capable of transmitting information in different directions on this time unit.

For example, the SBFD time unit may be a downlink time unit containing an uplink subband, or a flexible time unit containing an uplink subband, or an uplink time unit containing a downlink subband, or a flexible time unit containing a downlink subband, which is not limited in this disclosure.

In another possible implementation, the two adjacent hops are in different time units in the time domain, and both the two adjacent hops occupy the frequency domain resources of the uplink subband.

In another possible implementation, the two adjacent hops are in different time units in the time domain, and both the two adjacent hops occupy the frequency domain resources of the uplink BWP.

When the two adjacent hops are in different time units in the time domain and the occupied frequency domain resources meet the specified condition, the terminal can determine the target offset based on the first offsets.

In an embodiment of the present disclosure, Method 3 can be applied, but is not limited to, cross-slot frequency hopping or inter-repetition FH scenarios within different time units.

In a possible implementation, the terminal may determine one of the first offsets as a candidate offset based on the protocol agreement or scheduling by the base station.

The specific determination method is similar to the method of selecting one of multiple first offsets based on protocol agreement or scheduling of the base station in the above embodiments, and will not be repeated here.

Furthermore, in response to determining that a latter hop of the two adjacent hops occupies the frequency domain resources of the uplink BWP, the candidate offset is directly determined as the target offset.

Since the first offsets are configured by the base station for the terminal based on the second number of RBs occupied by the uplink BWP, in the case where the latter hop of the two adjacent hops occupies the frequency domain resources of the uplink BWP, and the terminal determines the candidate offset as the target offset, it can ensure that the frequency domain resources occupied during frequency hopping transmission of PUSCH will not exceed the frequency domain resource range occupied by the uplink BWP.

Alternatively, in response to determining that a latter hop of the two adjacent hops occupies the frequency domain resources of the uplink subband, the target offset is determined based on the candidate offset, wherein the target offset is the frequency domain offset that enables all frequency domain resources occupied by the latter hop to be within the frequency domain resource range occupied by the uplink subband.

In an example, in response to determining that the latter hop of the two adjacent hops occupies the frequency domain resources of the uplink subband, and that all frequency domain resources occupied by the latter hop determined based on the candidate offset are within the frequency domain resource range occupied by the uplink subband, the terminal directly determines the candidate offset as the target offset.

In an embodiment of the present disclosure, if the frequency domain resources occupied by the latter hop determined based on the candidate offset are all within the frequency domain resource range occupied by the uplink subband, the terminal can determine the candidate offset as the target offset, and subsequently transmit the PUSCH to the base station in the first time unit using frequency hopping based on the target offset.

In another example, in response to determining that the latter hop of the two adjacent hops occupies the frequency domain resources of the uplink subband, and at least some of the frequency domain resources occupied by the latter hop determined based on the candidate offset are outside the frequency domain resource range occupied by the uplink subband, the terminal may further offset the candidate offset to ultimately determine the target offset, which may be such that all frequency domain resources occupied by the latter hop are within the frequency domain offset range occupied by the uplink subband.

In an embodiment of the present disclosure, if the frequency domain resources occupied by the latter hop determined based on the candidate offset are all outside the frequency domain resource range occupied by the uplink subband, the terminal can re-determine the target offset by increasing or decreasing the candidate offset. Subsequently, based on the target offset, in the first time unit, the PUSCH is transmitted to the base station using frequency hopping.

For example, if the candidate offset is 50 RBs and at least some of the frequency domain resources occupied by the latter hop determined based on the candidate offset, assuming 10 RBs, are outside the frequency domain resource range occupied by the uplink subband, the terminal can adjust the candidate offset, such as reducing 10 RBs, to determine the target offset of 40 RBs, so that all frequency domain resources occupied by the latter hop are within the frequency domain offset range occupied by the uplink subband.

For example, if the candidate offset is -50 RBs and at least some of the frequency domain resources occupied by the latter hop determined based on the candidate offset, assuming 10 RBs, are outside the frequency domain resource range occupied by the uplink subband, the terminal can adjust the candidate offset, such as increasing 10 RBs, to determine the target offset of -40 RBs, so that all frequency domain resources occupied by the latter hop are within the frequency domain offset range occupied by the uplink subband.

It should be noted that the above "+" and "-" can respectively refer to offsetting in the direction of increasing or decreasing the number of RBs in the frequency domain.

In step 403, based on the target offset, in different time units, the PUSCH is transmitted to the base station using frequency hopping.

In an embodiment of the present disclosure, after determining the target offset, the terminal can perform inter-slot frequency hopping based on the target offset, that is, transmit the PUSCH to the base station using frequency hopping in different time units.

In the above embodiment, the terminal side can ensure through the offsetting of the first offset that the frequency domain resources occupied by the terminal during frequency hopping transmission of PUSCH do not exceed the frequency domain resource range occupied by the uplink BWP or uplink subband, achieving the goal of using frequency hopping to transmit PUSCH in different time units, improving the transmission performance of the uplink channel, and enhancing the feasibility of full duplex communication.

Next, the frequency hopping processing method provided in this disclosure will be introduced from the base station side.

Embodiments of the present disclosure provide a frequency hopping processing method. Referring to Fig. 5, which is a flowchart of a frequency hopping processing method according to an embodiment, the method can be performed by a base station, and the method may include the following steps.

In step 501, one or more first offsets are configured for a terminal.

In an embodiment of the present disclosure, the first offset is an available frequency domain offset corresponding to two adjacent hops when the terminal transmits a PUSCH using frequency hopping within a frequency domain resource range occupied by an uplink BWP.

It should be noted that the first offset in this disclosure refers to the number of RBs spaced between the RBs of two adjacent hops.

In a possible implementation, the uplink BWP is configured by the base station for the terminal on the uplink time unit or flexible time unit.

For example, if the base station configures the transmission direction of a certain time unit as uplink through tdd-UL-DL-Configurationcommon, then that time unit is the uplink time unit. Furthermore, the uplink BWP can be located within that uplink time unit in the time domain.

For another example, if the base station configures the transmission direction of a certain time unit as flexible through tdd-UL-DL-ConfigurationCommon, then that time unit is a flexible time unit. Furthermore, the base station indicates its transmission direction as uplink through tdd-UL-DL-ConfigurationDedicated, and the uplink BWP can be located within that time unit in the time domain.

In a possible implementation, the base station can notify the one or more first offsets configured for the terminal in the form of a list, such as a frequency hopping offset list for uplink BWP, which includes one or more first offsets.

In a possible implementation, the base station can notify the one or more first offsets configured for the terminal through the RRC signaling.

The above are only illustrative examples, and other methods used by the base station to notify the one or more offsets configured for the terminal should be within the scope of protection of this disclosure.

In step 502, in a case where the two adjacent hops are in different time units in the time domain and frequency domain resources occupied meet a specified condition, a target offset of the two adjacent hops is determined at least based on the first offsets.

In an embodiment of the present disclosure, the two adjacent hops may be in different time units in the time domain, and the time units in this disclosure may be in units of slots, symbols, spans, etc., which is not limited in this disclosure. One span includes multiple consecutive symbols.

Further, the frequency domain resources occupied by the two adjacent hops can meet the specified condition. Specifically, the specified condition includes any one of the following: the two adjacent hops respectively occupying frequency domain resources of the uplink subband and frequency domain resources of the uplink BWP, wherein the uplink subband is in the first time unit in the time domain, and the transmission direction of information on the uplink subband is different from a transmission direction of information within the first time unit; or, the two adjacent hops occupying the frequency domain resources of the uplink subband; or the two adjacent hops occupying the frequency domain resources of the uplink BWP.

In a possible implementation, the two adjacent hops are in different time units in the time domain, occupying the frequency domain resources of the uplink subband and the frequency domain resources of the uplink BWP respectively. Specifically, the first hop occupies the frequency domain resources of the uplink subband, the second hop occupies the frequency domain resources of the uplink BWP, or the first hop occupies the frequency domain resources of the uplink BWP and the second hop occupies the frequency domain resources of the uplink subband.

The uplink subband refers to a subband that is located within the first time unit in the time domain, and the transmission direction of information on the uplink subband is different from a transmission direction of information within the first time unit.

In an embodiment of the present disclosure, information includes but is not limited to signaling, signals, data, etc.

In embodiments of the present disclosure, the first time unit may be a Seamless Bidirectional Forwarding Detection (SBFD) time unit. The SBFD time unit is capable of transmitting information in different directions on this time unit.

For example, the SBFD time unit may be a downlink time unit containing an uplink subband, or a flexible time unit containing an uplink subband, or an uplink time unit containing a downlink subband, or a flexible time unit containing a downlink subband, which is not limited in this disclosure.

In another possible implementation, the two adjacent hops are in different time units in the time domain, and both the two adjacent hops occupy the frequency domain resources of the uplink subband.

In another possible implementation, the two adjacent hops are in different time units in the time domain, and both the two adjacent hops occupy the frequency domain resources of the uplink BWP.

When the two adjacent hops are in different time units in the time domain and the occupied frequency domain resources meet the specified condition, the base station at least can determine the target offset of the two adjacent hops used by the terminal side for transmitting the PUSCH using frequency hopping during inter-slot frequency hopping based on the one or more first offsets.

In step 503, based on the target offset, in different time units, the PUSCH transmitted by the terminal using frequency hopping is received.

In an embodiment of the present disclosure, after determining the target offset, the base station can receive the PUSCH transmitted by the terminal side to the base station using frequency hopping in different time units based on the target offset.

In the above embodiment, the purpose of using frequency hopping to transmit PUSCH in different time units has been achieved, ensuring that the frequency domain resources occupied by the terminal side during frequency hopping transmission of PUSCH will not exceed the frequency domain resource range occupied by the uplink BWP or uplink subband, improving the transmission performance of the uplink channel and the feasibility of full duplex communication.

In some optional embodiments, the terminal may determine the target offset using any of the following methods, but not limited to the following methods.

Method 1: the base station configures two independent sets of hopping offset lists for the terminal, namely dedicated hopping offset lists corresponding to the uplink BWP and uplink sub-band respectively.

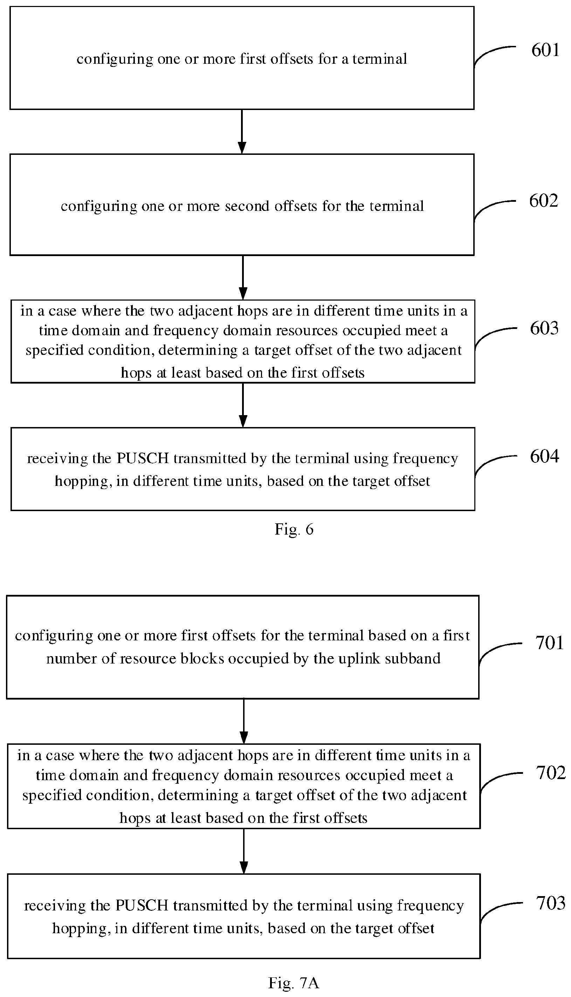

Please refer to Fig. 6, which is a flowchart of a frequency hopping processing method according to an embodiment, the method can be performed by a base station, and the method may include the following steps.

In step 601, one or more first offsets are configured for a terminal.

In an embodiment of the present disclosure, the first offset is an available frequency domain offset corresponding to two adjacent hops when the terminal transmits PUSCH using frequency hopping within a frequency domain resource range occupied by an uplink BWP.

It should be noted that the first offset in this disclosure refers to the number of RBs spaced between the RBs of the two adjacent hops.

In a possible implementation, the uplink BWP is configured by the base station for the terminal on the uplink time unit or flexible time unit.

For example, if the base station configures the transmission direction of a certain time unit as uplink through tdd-UL-DL-Configurationcommon, then that time unit is the uplink time unit. Furthermore, the uplink BWP can be located within that uplink time unit in the time domain.

For another example, if the base station configures the transmission direction of a certain time unit as flexible through tdd-UL-DL-ConfigurationCommon, then that time unit is a flexible time unit. Furthermore, the base station indicates its transmission direction as uplink through tdd-UL-DL-ConfigurationDedicated, and the uplink BWP can be located within that time unit in the time domain.

In a possible implementation, the base station can notify the one or more first offsets configured for the terminal in the form of a list, such as a frequency hop offset list for uplink BWP, which includes one or more first offsets.

In a possible implementation, the base station can notify the one or more first offsets configured for the terminal through the RRC signaling.

The above are only illustrative examples, and other methods used by the base station to notify the one or more offsets configured for the terminal should be within the scope of protection of this disclosure.

In step 602, one or more second offsets are configured for the terminal.

In an embodiment of the present disclosure, the second offset is the available frequency domain offset corresponding to two adjacent hops when the terminal transmits PUSCH using frequency hopping within the frequency domain resource range occupied by the uplink subband. Optionally, the base station can notify the one or more second offsets configured for the terminal in a list format.

It should be noted that the second offset in this disclosure refers to the number of RBs spaced between the RBs of two adjacent hops.

The uplink subband refers to a subband that is located within the first time unit in the time domain, and the transmission direction of information on the uplink subband is different from a transmission direction of information within the first time unit.

In an embodiment of the present disclosure, information includes but is not limited to signaling, signals, data, etc.

In embodiments of the present disclosure, the first time unit may be a SBFD time unit. The SBFD time unit is capable of transmitting information in different directions on this time unit.

For example, the SBFD time unit may be a downlink time unit containing an uplink subband, or a flexible time unit containing an uplink subband, or an uplink time unit containing a downlink subband, or a flexible time unit containing a downlink subband, which is not limited in this disclosure.

In an embodiment of the present disclosure, the base station configures a UL BWP dedicated list and an uplink subband dedicated list for the terminal. The UL BWP dedicated list may include one or more first offsets, and the uplink subband dedicated list may include one or more second offsets.

In a possible implementation, the base station may notify the one or more second offsets configured for the terminal through RRC signaling.

Optionally, the base station can notify the one or more first offsets and one or more second offsets configured for the terminal through the same or different RRC signaling.

In a possible implementation, the base station can configure one or more second offsets for the terminal based on the first number of RBs occupied by the uplink subband.

For example, when the first number is less than 50, the base station can configure up to two second offsets for the terminal. When the first number is greater than or equal to 50, the base station can configure up to four second offsets for the terminal.

In step 603, in a case where the two adjacent hops are in different time units in the time domain and occupied frequency domain resources meet a specified condition, a target offset of the two adjacent hops is determined at least based on the first offsets.

In an embodiment of the present disclosure, the two adjacent hops may be in different time units in the time domain, and the time units in this disclosure may be in units of slots, symbols, spans, etc., which is not limited in this disclosure. One span includes multiple consecutive symbols.

Further, the frequency domain resources occupied by the two adjacent hops can meet the specified condition. Specifically, the specified condition includes any one of the following: the two adjacent hops respectively occupying frequency domain resources of the uplink subband and frequency domain resources of the uplink BWP, wherein the uplink subband is in the first time unit in the time domain, and the transmission direction of information on the uplink subband is different from a transmission direction of information within the first time unit; or, the two adjacent hops occupying the frequency domain resources of the uplink subband; or the two adjacent hops occupying the frequency domain resources of the uplink BWP.

In a possible implementation, the two adjacent hops are in different time units in the time domain, occupying the frequency domain resources of the uplink subband and the frequency domain resources of the uplink BWP respectively. Specifically, the first hop occupies the frequency domain resources of the uplink subband, the second hop occupies the frequency domain resources of the uplink BWP, or the first hop occupies the frequency domain resources of the uplink BWP and the second hop occupies the frequency domain resources of the uplink subband.

The uplink subband refers to a subband that is located within the first time unit in the time domain, and the transmission direction of information on the uplink subband is different from a transmission direction of information within the first time unit.

In an embodiment of the present disclosure, information includes but is not limited to signaling, signals, data, etc.

In embodiments of the present disclosure, the first time unit may be a SBFD time unit. The SBFD time unit is capable of transmitting information in different directions on this time unit.

For example, the SBFD time unit may be a downlink time unit containing an uplink subband, or a flexible time unit containing an uplink subband, or an uplink time unit containing a downlink subband, or a flexible time unit containing a downlink subband, which is not limited in this disclosure.

In another possible implementation, the two adjacent hops are in different time units in the time domain, and both the two adjacent hops occupy the frequency domain resources of the uplink subband.

In another possible implementation, the two adjacent hops are in different time units in the time domain, and both the two adjacent hops occupy the frequency domain resources of the uplink BWP.

When the two adjacent hops are in different time units in the time domain and the occupied frequency domain resources meet the specified condition, the base station can determine the target offset used by the terminal side for transmitting the PUSCH using frequency hopping jointly based on the first offsets and the second offsets.

In a possible implementation, in response to determining that a latter hop of the two adjacent hops occupies the frequency domain resources of the uplink subband, one of the second offsets is determined as the target offset based on a protocol agreement.

In an embodiment of the present disclosure, the base station may sequentially select one of the second offsets as the target offset in accordance with the protocol agreement.

In another possible implementation, in response to determining that a latter hop of the two adjacent hops occupies the frequency domain resources of the uplink subband, the second offset scheduled by the base station for the terminal is determined as the target offset.

In an embodiment of the present disclosure, the base station may use the FDRA field in the DCI to indicate the second offset scheduled for the terminal, and the base station may use the second offset scheduled for the terminal as the target offset.

In another possible implementation, in response to determining that a latter hop of the two adjacent hops occupies the frequency domain resources of the uplink BWP, one of the first offsets is determined as the target offset based on a protocol agreement.

In an embodiment of the present disclosure, the base station may sequentially select one of the one or more first offsets as the target offset in accordance with the protocol agreement.

In another possible implementation, in response to determining that a latter hop of the two adjacent hops occupies the frequency domain resources of the uplink BWP, the first offset scheduled by the base station for the terminal is determined as the target offset.

In an embodiment of the present disclosure, the base station may use the FDRA field in the DCI to indicate the first offset scheduled for the terminal, and the base station may use the first offset scheduled for the terminal as the target offset.

In step 604, based on the target offset, in different time units, the PUSCH transmitted by the terminal using frequency hopping is received.

In embodiments of the present disclosure, after determining the target offset, the terminal can perform inter-slot frequency hopping based on the target offset, that is, transmit the PUSCH to the base station using frequency hopping in different time units.

In the above embodiment, the base station configures the offsets used for frequency hopping transmission of PUSCH for the uplink subband and uplink BWP separately for the terminal, achieving the purpose of using frequency hopping to transmit PUSCH in different time units, ensuring that the frequency domain resources occupied by the terminal side during frequency hopping transmission of PUSCH will not exceed the frequency domain resource range occupied by the uplink BWP or uplink subband, improving the transmission performance of the uplink channel, and enhancing the feasibility of full duplex communication.

Method 2-1: the first offsets configured by the base station will not cause frequency hopping transmission to exceed the frequency domain range of the uplink subband.

Please refer to Fig. 7A, which is a flowchart of a frequency hopping processing method according to an embodiment, the method can be performed by a base station, and the method may include the following steps.

In step 701, one or more first offsets are configured for a terminal based on a first number of resource blocks occupied by the uplink subband.

In an embodiment of the present disclosure, the first offset is the available frequency domain offset corresponding to two adjacent hops when the terminal transmits PUSCH using frequency hopping within the frequency domain resource range occupied by the uplink BWP.

It should be noted that the first offset in this disclosure refers to the number of RBs spaced between RBs of the two adjacent hops.

In a possible implementation, the uplink BWP is configured by the base station for the terminal on the uplink time unit or flexible time unit.

In an embodiment of the present disclosure, the base station directly configures the first offsets based on the first number of resource blocks occupied by the uplink subband configured for the terminal, ensuring that the frequency domain resources occupied by the hop based on PUCCH scheduling on the terminal side are outside the frequency domain resource range occupied by the uplink subband.

In a possible implementation, when the first number is less than 50, the base station can configure up to two first offsets for the terminal. When the first number is greater than or equal to 50, the base station can configure up to four first offsets for the terminal.

In a possible implementation, the base station can notify the one or more first offsets configured for the terminal in the form of a list, such as a frequency hopping offset list for uplink BWP, which includes one or more first offsets.

In a possible implementation, the base station can notify the one or more first offsets configured for the terminal through the RRC signaling.

In step 702, in a case where the two adjacent hops are in different time units in the time domain and frequency domain resources occupied meet the specified condition, the target offset of the two adjacent hops is determined at least based on the first offsets.

In an embodiment of the present disclosure, the two adjacent hops may be in different time units in the time domain, and the time units in this disclosure may be in units of slots, symbols, spans, etc., which is not limited in this disclosure. One span includes multiple consecutive symbols.

Further, the frequency domain resources occupied by the two adjacent hops can meet the specified condition. Specifically, the specified condition includes any one of the following: the two adjacent hops respectively occupying frequency domain resources of the uplink subband and frequency domain resources of the uplink BWP, wherein the uplink subband is in the first time unit in the time domain, and the transmission direction of information on the uplink subband is different from a transmission direction of information within the first time unit; or, the two adjacent hops occupying the frequency domain resources of the uplink subband; or the two adjacent hops occupying the frequency domain resources of the uplink BWP.

In a possible implementation, the two adjacent hops are in different time units in the time domain, occupying the frequency domain resources of the uplink subband and the frequency domain resources of the uplink BWP respectively. Specifically, the first hop occupies the frequency domain resources of the uplink subband, the second hop occupies the frequency domain resources of the uplink BWP, or the first hop occupies the frequency domain resources of the uplink BWP and the second hop occupies the frequency domain resources of the uplink subband.

The uplink subband refers to a subband that is located within the first time unit in the time domain, and the transmission direction of information on the uplink subband is different from a transmission direction of information within the first time unit.

In an embodiment of the present disclosure, information includes but is not limited to signaling, signals, data, etc.

In an embodiment of the present disclosure, the first time unit may be a SBFD time unit. The SBFD time unit is capable of transmitting information in different directions on this time unit.

For example, the SBFD time unit may be a downlink time unit containing an uplink subband, or a flexible time unit containing an uplink subband, or an uplink time unit containing a downlink subband, or a flexible time unit containing a downlink subband, which is not limited in this disclosure.

In another possible implementation, the two adjacent hops are in different time units in the time domain, and both the two adjacent hops occupy the frequency domain resources of the uplink subband.

In another possible implementation, the two adjacent hops are in different time units in the time domain, and both the two adjacent hops occupy the frequency domain resources of the uplink BWP.

When the two adjacent hops are in different time units in the time domain and the occupied frequency domain resources meet the specified condition, the base station can determine the target offset of the two adjacent hops when the terminal transmits the PUSCH using frequency hopping, based on the first offsets.

In a possible implementation, the base station can determine one of the first offsets as the target offset based on a protocol agreement.

In an embodiment of the present disclosure, the base station may sequentially select one of the one or more first offsets as the target offset in accordance with the protocol agreement.

In another possible implementation, the first offset scheduled by the base station for the terminal is determined as the target offset.

In an embodiment of the present disclosure, the base station may use the FDRA field in the DCI to indicate the first offset scheduled for the terminal, and the base station directly uses the first offset scheduled for the terminal as the target offset.

In step 703, based on the target offset, in different time units, the PUSCH transmitted by the terminal using frequency hopping is received.

In an embodiment of the present disclosure, after determining the target offset, the base station can receive the PUSCH transmitted by the terminal side to the base station using frequency hopping in different time units, based on the target offset.

In the above embodiment, the base station side can ensure through the configuration process of the first offsets that the frequency domain resources occupied by the terminal during frequency hopping transmission of PUSCH will not exceed the frequency domain resource range occupied by the uplink BWP or uplink subband, achieving the goal of using frequency hopping to transmit PUSCH in different time units, improving the transmission performance of the uplink channel, and enhancing the feasibility of full duplex communication.

Method 2-2: the base station ensures through scheduling that the frequency domain resources occupied by the terminal side during frequency hopping transmission of PUSCH will not exceed the frequency domain resource range occupied by the uplink BWP or uplink subband.

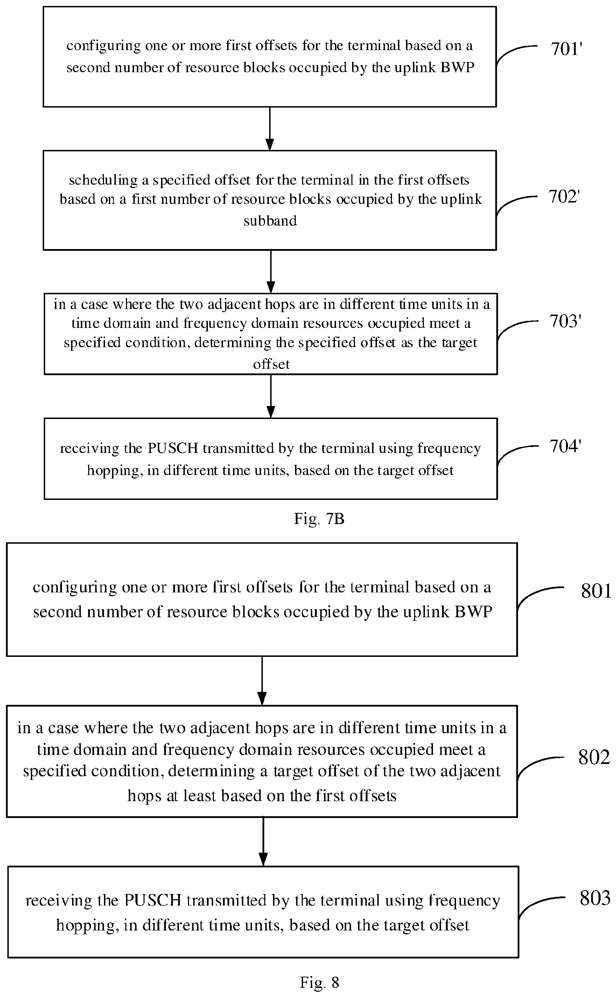

Please refer to Fig. 7B, which is a flowchart of a frequency hopping processing method according to an embodiment, the method can be performed by a base station, and the method may include the following steps.

In step 701', one or more first offsets are configured for a terminal based on a second number of resource blocks occupied by the uplink BWP.

In an embodiment of the present disclosure, the first offset is the available frequency domain offset corresponding to two adjacent hops when the terminal transmits PUSCH using frequency hopping within the frequency domain resource range occupied by the uplink BWP.

It should be noted that the first offset in this disclosure refers to the number of RBs spaced between RBs of the two adjacent hops.

In a possible implementation, the uplink BWP is configured by the base station for the terminal on the uplink time unit or flexible time unit.

In an embodiment of the present disclosure, the base station can configure the first offsets based on the second number of resource blocks occupied by the uplink BWP configured for the terminal.

In a possible implementation, when the second number is less than 50, the base station can configure up to two first offsets for the terminal. When the second number is greater than or equal to 50, the base station can configure up to four first offsets for the terminal.

In a possible implementation, the base station can notify the one or more first offsets configured for the terminal in the form of a list, such as a frequency hopping offset list for uplink BWP, which includes one or more first offsets.

In a possible implementation, the base station can notify the one or more first offsets configured for the terminal through the RRC signaling.

In step 702', a specified offset is scheduled for the terminal in the first offsets based on the first number of resource blocks occupied by the uplink subband.

In an embodiment of the present disclosure, the uplink subband is located within the first time unit in the time domain, and the transmission direction of information on the uplink subband is different from a transmission direction of information within the first time unit.

In an embodiment of the present disclosure, information includes but is not limited to signaling, signals, data, etc.

In an embodiment of the present disclosure, the first time unit may be a SBFD time unit. The SBFD time unit is capable of transmitting information in different directions on this time unit.

For example, the SBFD time unit may be a downlink time unit containing an uplink subband, or a flexible time unit containing an uplink subband, or an uplink time unit containing a downlink subband, or a flexible time unit containing a downlink subband, which is not limited in this disclosure.

For example, if the first offsets include 30 RBs and 50 RBs, and the first number of resource blocks occupied by the uplink subband is 40 RBs, then the base station schedules a specified offset for the terminal from the first offsets, which is 30 RBs.

In step 703', in a case where the two adjacent hops are in different time units in the time domain and frequency domain resources occupied meet the specified condition, the specified offset is determined as the target offset.

In an embodiment of the present disclosure, the two adjacent hops may be in different time units in the time domain, and the time units in this disclosure may be in units of slots, symbols, spans, etc., which is not limited in this disclosure. One span includes multiple consecutive symbols.

Further, the frequency domain resources occupied by the two adjacent hops can meet the specified condition. Specifically, the specified condition includes any one of the following: the two adjacent hops respectively occupying frequency domain resources of the uplink subband and frequency domain resources of the uplink BWP, wherein the uplink subband is in the first time unit in the time domain, and the transmission direction of information on the uplink subband is different from a transmission direction of information within the first time unit; or, the two adjacent hops occupying the frequency domain resources of the uplink subband; or the two adjacent hops occupying the frequency domain resources of the uplink BWP.

In a possible implementation, the two adjacent hops are in different time units in the time domain, occupying the frequency domain resources of the uplink subband and the frequency domain resources of the uplink BWP respectively. Specifically, the first hop occupies the frequency domain resources of the uplink subband, the second hop occupies the frequency domain resources of the uplink BWP, or the first hop occupies the frequency domain resources of the uplink BWP and the second hop occupies the frequency domain resources of the uplink subband.

The uplink subband refers to a subband that is located within the first time unit in the time domain, and the transmission direction of information on the uplink subband is different from a transmission direction of information within the first time unit.

In an embodiment of the present disclosure, information includes but is not limited to signaling, signals, data, etc.

In an embodiment of the present disclosure, the first time unit may be a SBFD time unit. The SBFD time unit is capable of transmitting information in different directions on this time unit.

For example, the SBFD time unit may be a downlink time unit containing an uplink subband, or a flexible time unit containing an uplink subband, or an uplink time unit containing a downlink subband, or a flexible time unit containing a downlink subband, which is not limited in this disclosure.

In another possible implementation, the two adjacent hops are in different time units in the time domain, and both the two adjacent hops occupy the frequency domain resources of the uplink subband.

In another possible implementation, the two adjacent hops are in different time units in the time domain, and both the two adjacent hops occupy the frequency domain resources of the uplink BWP.

When the two adjacent hops are in different time units in the time domain and the occupied frequency domain resources meet the specified condition, the base station can directly determine the specified offset as the target offset of the two adjacent hops used by the terminal when transmitting the PUSCH using frequency hopping.

In step 704', based on the target offset, the PUSCH transmitted by the terminal using frequency hopping is received in different time units.

In an embodiment of the present disclosure, after determining the target offset, the base station can receive the PUSCH transmitted by the terminal side to the base station using frequency hopping in different time units, based on the target offset.

In the above embodiment, the base station side can ensure through the scheduling process of the first offset that the frequency domain resources occupied by the terminal during frequency hopping transmission of PUSCH will not exceed the frequency domain resource range occupied by the uplink BWP or uplink subband, achieving the goal of using frequency hopping to transmit PUSCH in different time units, improving the transmission performance of the uplink channel, and enhancing the feasibility of full duplex communication.

Method 3: The base station determines that the terminal supports offsetting one or more first offsets configured, thereby determining the target offset.

Referring to Fig. 8, which is a flowchart of a frequency hopping processing method according to an embodiment, the method can be performed by the base station, and the method may include the following steps.

In step 801, one or more first offsets are configured for a terminal based on a second number of resource blocks occupied by the uplink BWP.

In an embodiment of the present disclosure, the first offset is the available frequency domain offset corresponding to two adjacent hops when the terminal transmits PUSCH using frequency hopping within the frequency domain resource range occupied by the uplink BWP.

It should be noted that the first offset in this disclosure refers to the number of RBs spaced between RBs of the two adjacent hops.

In a possible implementation, the uplink BWP is configured by the base station for the terminal on the uplink time unit or flexible time unit.

In an embodiment of the present disclosure, the base station can configure the first offsets based on the second number of resource blocks occupied by the uplink BWP configured for the terminal.

In a possible implementation, when the second number is less than 50, the base station can configure up to two first offsets for the terminal. When the second number is greater than or equal to 50, the base station can configure up to four first offsets for the terminal.

In a possible implementation, the base station can notify the one or more first offsets configured for the terminal in the form of a list, such as a frequency hopping offset list for uplink BWP, which includes one or more first offsets.

In a possible implementation, the base station can notify the one or more first offsets configured for the terminal through the RRC signaling.

In step 802, in a case where the two adjacent hops are in different time units in the time domain and frequency domain resources occupied meet the specified condition, the target offset of the two adjacent hops is determined at least based on the first offsets.

In an embodiment of the present disclosure, the two adjacent hops may be in different time units in the time domain, and the time units in this disclosure may be in units of slots, symbols, spans, etc., which is not limited in this disclosure. One span includes multiple consecutive symbols.

Further, the frequency domain resources occupied by the two adjacent hops can meet the specified condition. Specifically, the specified condition includes any one of the following: the two adjacent hops respectively occupying frequency domain resources of the uplink subband and frequency domain resources of the uplink BWP, wherein the uplink subband is in the first time unit in the time domain, and the transmission direction of information on the uplink subband is different from a transmission direction of information within the first time unit; or, the two adjacent hops occupying the frequency domain resources of the uplink subband; or the two adjacent hops occupying the frequency domain resources of the uplink BWP.

In a possible implementation, the two adjacent hops are in different time units in the time domain, occupying the frequency domain resources of the uplink subband and the frequency domain resources of the uplink BWP respectively. Specifically, the first hop occupies the frequency domain resources of the uplink subband, the second hop occupies the frequency domain resources of the uplink BWP, or the first hop occupies the frequency domain resources of the uplink BWP and the second hop occupies the frequency domain resources of the uplink subband.

The uplink subband refers to a subband that is located within the first time unit in the time domain, and the transmission direction of information on the uplink subband is different from a transmission direction of information within the first time unit.

In an embodiment of the present disclosure, information includes but is not limited to signaling, signals, data, etc.

In an embodiment of the present disclosure, the first time unit may be a SBFD time unit. The SBFD time unit is capable of transmitting information in different directions on this time unit.

For example, the SBFD time unit may be a downlink time unit containing an uplink subband, or a flexible time unit containing an uplink subband, or an uplink time unit containing a downlink subband, or a flexible time unit containing a downlink subband, which is not limited in this disclosure.

In another possible implementation, the two adjacent hops are in different time units in the time domain, and both the two adjacent hops occupy the frequency domain resources of the uplink subband.

In another possible implementation, the two adjacent hops are in different time units in the time domain, and both the two adjacent hops occupy the frequency domain resources of the uplink BWP.

When the two adjacent hops are in different time units in the time domain and the occupied frequency domain resources meet the specified condition, the base station can determine the target offset of the two adjacent hops used by the terminal when transmitting the PUSCH using frequency hopping, based on the first offsets.

In an embodiment of the present disclosure, Method 3 can be applied, but is not limited to, cross-slot frequency hopping or inter-repetition FH scenarios within different time units. The inter-repetition FH refers to that when PUSCH is transmitted using frequency hopping in different time units, the PUSCH belongs to the same PUSCH that is transmitted repeatedly.

In a possible implementation, the base station may determine one of the first offsets as a candidate offset based on the protocol agreement or scheduling by the base station for the terminal.

The specific determination method is similar to the method of selecting one of multiple first offsets based on protocol agreement or scheduling of the base station in the above embodiments, and will not be repeated here.

Furthermore, in response to determining that a latter hop of the two adjacent hops occupies the frequency domain resources of the uplink BWP, the candidate offset is directly determined as the target offset.

Since the first offsets are configured by the base station for the terminal based on the second number of RBs occupied by the uplink BWP, in the case where the latter hop of the two adjacent hops occupies the frequency domain resources of the uplink BWP, and the base station determines that the terminal directly uses the candidate offset as the target offset, it can ensure that the frequency domain resources occupied by the terminal during frequency hopping transmission of PUSCH will not exceed the frequency domain resource range occupied by the uplink BWP.

Alternatively, in response to determining that a latter hop of the two adjacent hops occupies the frequency domain resources of the uplink subband, the target offset is determined based on the candidate offset, wherein the target offset is the frequency domain offset that enables all frequency domain resources occupied by the latter hop to be within the frequency domain resource range occupied by the uplink subband.

In an example, in response to determining that the latter hop of the two adjacent hops occupies the frequency domain resources of the uplink subband, and that all frequency domain resources occupied by the latter hop determined based on the candidate offset are within the frequency domain resource range occupied by the uplink subband, the base station directly determines the candidate offset as the target offset.

In another example, in response to determining that the latter hop of the two adjacent hops occupies the frequency domain resources of the uplink subband, and at least some of the frequency domain resources occupied by the latter hop determined based on the candidate offset are outside the frequency domain resource range occupied by the uplink subband, the base station determines that the terminal may further offset the candidate offset to ultimately determine the target offset, which may be such that all frequency domain resources occupied by the latter hop are within the frequency domain offset range occupied by the uplink subband.

The specific determination method is similar to step 403 on the terminal side, and will not be repeated here.

In step 803, based on the target offset, the PUSCH transmitted by the terminal using frequency hopping is received in different time units.

In an embodiment of the present disclosure, after determining the target offset, the base station can receive the PUSCH transmitted by the terminal side to the base station using frequency hopping, based on the target offset.

In the above embodiment, the terminal side can ensure through the offsetting of the first offset that the frequency domain resources occupied by the terminal during frequency hopping transmission of PUSCH do not exceed the frequency domain resource range occupied by the uplink BWP or uplink subband, achieving the goal of using frequency hopping to transmit PUSCH in different time units, improving the transmission performance of the uplink channel, and enhancing the feasibility of full duplex communication.

The frequency hopping processing method provided in this disclosure is further illustrated as follows.

Embodiment 1, assume that the terminal is a Rel-18 or later version terminal with half duplex capability or full duplex capability, which is not limited in disclosure. Assume that the base station performs full duplex operation on the semi-static DL symbol in the Time Division Duplex (TDD) frequency band or DL symbol indicated by the Slot Format Indication (SFI), that is, scheduling downlink data and uplink data simultaneously. It should be noted that the base station can also perform full duplex operation on the semi-static UL symbol in the TDD frequency band or on the UL symbol indicated by SFI, that is, simultaneously scheduling downlink data and uplink data. The semi-static flexible symbol is determined through tdd-UL-DL-ConfigurationCommon sent by the base station or through tdd-UL-DL-ConfigurationCommon and tdd-UL-DL-ConfigurationDedicated.

In this embodiment, the base station indicates the transmission direction of the terminal on the DL symbol as follows.

The base station configures a UL subband for the terminal. Within the UL subband, the terminal can only perform uplink transmission. The base station schedules data channels or indicates reference signals within the UL subband or DL subband.

In this embodiment, it is assumed that the time slot structure configured by the base station through TDD-UL-DL configuration is DDDFU, that is, during the TDD configuration period, the first three slots are DL slots, the fourth slot is flexible slot, and the fifth slot is UL slot. Of course, the method of this embodiment can also be directly applied to other TDD UL DL time slot structures.
a) In this embodiment, the base station configures two sets of FH offset lists for the terminal, namely:
   the FH offset list for per UL BWP, which is the FH offset list supported in the current protocol, is applied to the PUSCH transmitted within the active UL BWP. The list includes one or more first offsets, which are the available frequency domain offsets corresponding to two adjacent hops when the terminal transmits the physical uplink shared channel (PUSCH) using frequency hopping within the frequency domain resource range occupied by the uplink bandwidth part (BWP);
   the FH offset list per UL subband, which is used for PUSCH transmitted within the UL subband. The list includes one or more second offsets, which are the available frequency domain offsets corresponding to adjacent hops when the terminal transmits the PUSCH using frequency hopping within the frequency domain resource range occupied by the uplink subband.

When the PUSCH is transmitted in UL BWP, the resource location occupied by PUSCH hop is determined according to the FH offset list per BWP. When PUSCH is transmitted in UL subband, the resource location occupied by PUSCH hop is determined according to the FH offset list per subband.

The base station can configure up to M FH offsets per UL BWP for the terminal based on the bandwidth of UL BWP, i.e. M first offsets, and up to N FH offsets per UL subband for the terminal based on the bandwidth of UL subband, i.e. N second offsets. M and N are integers greater than or equal to 1. In this embodiment, for simplicity, it is assumed that M=N=1.

Assume that the base station has enabled PUSCH repetition and inter-slot frequency hopping functions, and assume that the number of repetitions is 4. For PUSCH repetition transmitted within the UL subband, the frequency domain position occupied by the PUSCH hop is determined based on the FH offset per UL subband; for PUSCH repetition transmitted within the UL slot, the frequency domain position occupied by the PUSCH hop is determined based on the FH offset per UL BWP.

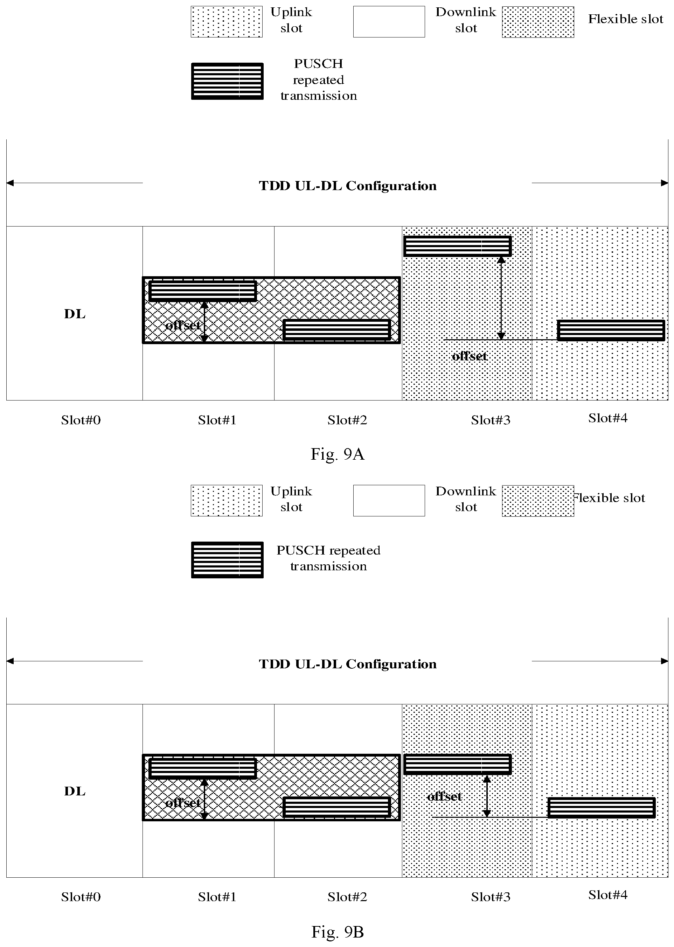

In this embodiment, referring to Fig. 9A, assuming that the bit value of the FDRA field carried by the DCI scheduling PUSCH is 00, the terminal side can determine that the FH offset in the UL subband is 15 RBs and the FH offset in the UL slot is 30 RBs. Correspondingly, if the latter hop of the two adjacent hops occupies the frequency domain resources of the uplink subband, the target offset is 15 RBs, and if the latter hop of the two adjacent hops occupies the frequency domain resources of the uplink BWP, the target offset is 30 RBs.

Embodiment 2, assume that the terminal is a Rel-18 or later version terminal with half duplex capability or full duplex capability, which is not limited in this disclosure. Assume that the base station performs full duplex operation on the semi-static DL symbol in TDD frequency band or DL symbol indicated by SFI, that is, scheduling downlink data and uplink data simultaneously. It should be noted that the base station can also perform full duplex operation on the semi-static UL symbol in the TDD frequency band or on the UL symbol indicated by SFI, that is, simultaneously scheduling downlink data and uplink data. The semi-static flexible symbol is determined through tdd-UL-DL-ConfigurationCommon sent by the base station or through tdd-UL-DL-ConfigurationCommon and tdd-UL-DL-ConfigurationDedicated. In this embodiment, the base station indicates the transmission direction of the terminal on the DL symbol as follows.

The base station configures a UL subband for the terminal. Within the UL subband, the terminal can only perform uplink transmission. The base station schedules data channels or indicates reference signals within the UL subband or DL subband.

In this embodiment, it is assumed that the time slot structure configured by the base station through TDD UL-DL configuration is DDDFU, that is, during the TDD configuration period, the first three slots are DL slots, the fourth slot is flexible slot, and the fifth slot is UL slot. Of course, the method of this embodiment can also be directly applied to other TDD UL DL time slot structures.

In this embodiment, the terminal does not expect the frequency hop offset list configured by the base station to cause the PUCCH hop to exceed the frequency domain range of the UL subband. That is to say, when configuring the FH offset list, the base station needs to ensure that at least one FH offset indicates two hops within the UL subband range.

The base station can configure up to M first offsets for the terminal based on the first number of RBs occupied by the uplink subband. M is an integer greater than or equal to 1. In this embodiment, for simplicity, it is assumed that M=1. RB offset#1 is 15 RBs.

Referring to Fig. 9B, the terminal uses a target offset of 15 RBs and transmits the PUSCH using frequency hopping. In another example, the base station can configure up to M first offsets for the terminal based on the second number of RBs occupied by the uplink BWP. M is an integer greater than or equal to 1. In this embodiment, for simplicity, it is assumed that M=2. RB offset#1 is 15 RBs, and RB offset#2 is 30 RBs.

Correspondingly, referring to Fig. 9B, when the base station schedules, it can indicate that the offset between two hops is offset#1, which is 15 RBs, ensuring that both hops are within the UL subband range.

Embodiment 3, assume that the terminal is a Rel-18 or later version terminal with half duplex capability or full duplex capability, which is not limited in this disclosure. Assume that the base station performs full duplex operation on the semi-static DL symbol in the TDD frequency band or the DL symbol indicated by SFI, that is, scheduling downlink data and uplink data simultaneously. It should be noted that the base station can also perform full duplex operation on the semi-static UL symbol in the TDD frequency band or on the UL symbol indicated by SFI, that is, simultaneously scheduling downlink data and uplink data. The semi-static flexible symbol is determined through tdd-UL-DL-ConfigurationCommon sent by the base station or through tdd-UL-DL-ConfigurationCommon and tdd-UL-DL-ConfigurationDedicated. In this embodiment, the base station indicates the transmission direction of the terminal on the DL symbol as follows.

The base station configures a UL subband for the terminal. Within the UL subband, the terminal can only perform uplink transmission. The base station schedules data channels or indicates reference signals within the UL subband or DL subband.

In this embodiment, it is assumed that the time slot structure configured by the base station through TDD UL-DL configuration is DDDFU, that is, during the TDD configuration period, the first three slots are DL slots, the fourth slot is flexible slot, and the fifth slot is UL slot. Of course, the method of this embodiment can also be directly applied to other TDD UL DL time slot structures.

In this embodiment, the terminal determines the frequency domain resources occupied by the inter-slot PUSCH hop based on the frequency hop list configured by the base station using the following method:
if both hops determined by FH offset are within the UL subband range, frequency hopping will be performed according to the FH offset;
if two hops determined by FH offset exceed the UL subband frequency domain range, the nominal hop outside the range will be offset to the UL subband range.

That is, in this embodiment, the FH offset list per BWP defined in the current protocol is fully reused.

In this embodiment, take the two adjacent hops both occupying the frequency domain resources of the uplink subband as an example, and it is assumed that the FH offset list configured by the base station for the terminal includes two FH offsets, namely FH offset#1=15 RBs and FH offset#1=30 RBs. Assume that the offset scheduled by the base station is 30 RBs.

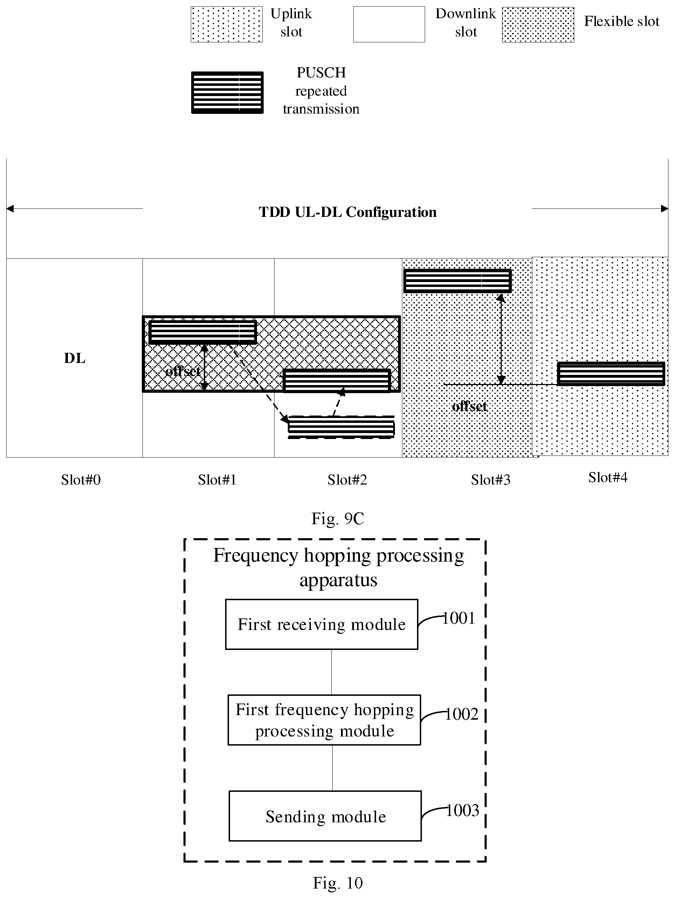

The second hop transmitted within the UL subband will exceed the range of the UL subband. For the second hop transmitted within the UL subband, the terminal can align the first RB of the second hop with the lowest RB of the UL subband, ensuring that both PUSCH hops are located within the UL subband, as shown in Fig. 9C.

In the above embodiment, the purpose of using frequency hopping to transmit PUSCH in different time units has been achieved, ensuring that the frequency domain resources occupied by the terminal side during frequency hopping transmission of PUSCH will not exceed the frequency domain resource range occupied by the uplink BWP or uplink subband, improving the transmission performance of the uplink channel and the feasibility of full duplex communication.

Corresponding to the aforementioned method embodiments implemented by applying functions, this disclosure also provides apparatus embodiments implemented by applying functions.

Referring to Fig. 10, which is a block diagram of a frequency hopping processing apparatus according to an exemplary embodiment, the apparatus is applied in a terminal, and includes:
a first receiving module 1001, configured to receive one or more first offsets configured by a base station for the terminal, wherein the first offset is an available frequency domain offset corresponding to two adjacent hops when the terminal transmits a physical uplink shared channel (PUSCH) using frequency hopping within a frequency domain resource range occupied by an uplink bandwidth part (BWP);
a first frequency hopping processing module 1002, configured to, in a case where the two adjacent hops are in different time units in a time domain and frequency domain resources occupied meet a specified condition, determine a target offset of the two adjacent hops at least based on the first offsets;
a sending module 1003, configured to transmit the PUSCH to the base station using frequency hopping, in different time units, based on the target offset.

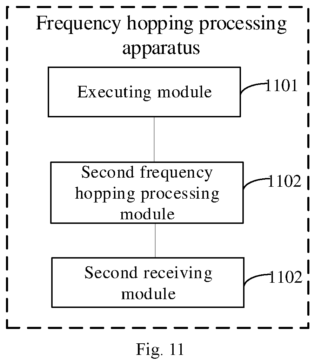

Referring to Fig. 11, which is a block diagram of a frequency hopping processing apparatus according to an exemplary embodiment, the apparatus is applied in a base station, and includes:
an executing module 1101, configured to configure one or more first offsets for a terminal, wherein the first offset is an available frequency domain offset corresponding to two adjacent hops when the terminal transmits a physical uplink shared channel (PUSCH) using frequency hopping within a frequency domain resource range occupied by an uplink bandwidth part (BWP);
a second frequency hopping processing module 1102, configured to, in a case where the two adjacent hops are in different time units in a time domain and frequency domain resources occupied meet a specified condition, determine a target offset of the two adjacent hops at least based on the first offsets;
a second receiving module 1103, configured to receive the PUSCH transmitted by the terminal using frequency hopping, in different time units, based on the target offset.

For the apparatus embodiments, as they basically correspond to the method embodiments, please refer to the partial explanation of the method embodiments for relevant information. The above described embodiments of the apparatus are only illustrative, where the units described as separate components may or may not be physically separated, and the components displayed as units may or may not be physical units, that is, they can be located in one place or distributed across multiple network units. The purpose of this disclosed solution can be achieved by selecting some or all of the modules according to the actual situation. Ordinary technical personnel in this field can understand and implement without putting in creative labor.

Correspondingly, the present disclosure further provides a frequency hopping processing apparatus, including:
a processor; and
a memory, configured to store instructions executable by the processor;
wherein the processor is configured to execute the frequency hopping processing method on the terminal side described above.

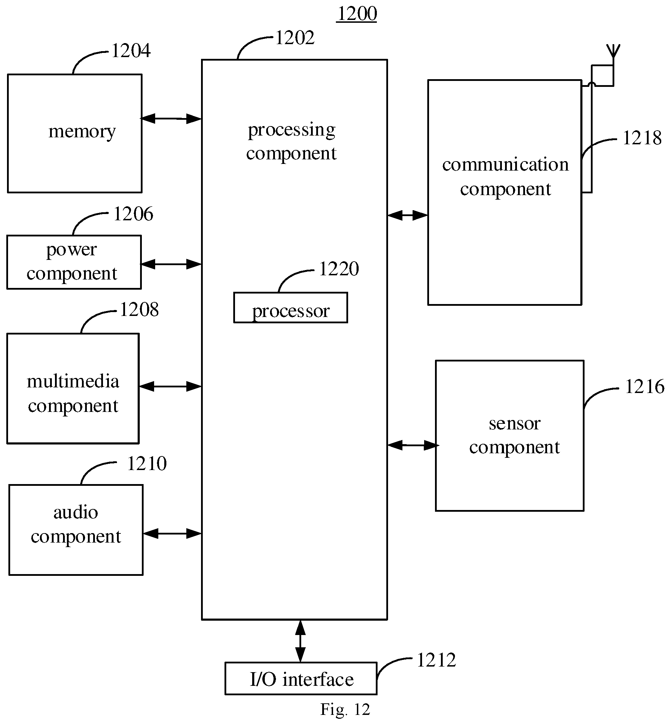

Fig. 12 is a block diagram of a frequency hopping processing apparatus 1200 according to an exemplary embodiment. For example, the apparatus 1200 may be a smartphone, a tablet, an e-book reader, a multimedia playback device, a wearable device, an on-board user equipment, an ipad, a smart TV, etc.

Referring to Fig. 12, the apparatus 1200 may include one or more of the following components: a processing component 1202, a memory 1204, a power component 1206, a multimedia component 1208, an audio component 1210, an input/output (I/O) interface 1212, a sensor component 1216, and a communication component 1218.

The processing component 1202 typically controls overall operations of the apparatus 1200, such as the operations associated with display, telephone calls, data communications, camera operations, and recording operations. The processing component 1202 may include one or more processors 1220 to execute instructions, to complete all or some of steps of the frequency hopping processing method described above. Moreover, the processing component 1202 may include one or more modules which facilitate the interaction between the processing component 1202 and other components. For instance, the processing component 1202 may include a multimedia module to facilitate the interaction between the multimedia component 1208 and the processing component 1202. For another instance, the processing component 1202 can read executable instructions from the memory to implement the steps of the frequency hopping processing method provided in the above embodiments.

The memory 1204 is configured to store various types of data to support the operation of the apparatus 1200. Examples of such data include instructions for any applications or methods operated on the apparatus 1200, contact data, phonebook data, messages, pictures, video, etc. The memory 1204 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1206 provides power to various components of the apparatus 1200. The power component 1206 may include a power management system, one or more power sources, and any other components associated with the generation, management, and distribution of power in the apparatus 1200.

The multimedia component 1208 includes a screen providing an output interface between the apparatus 1200 and the user. In some embodiments, the screen may include a liquid crystal display (LCD) and a touch panel (TP). In some embodiments, the multimedia component 1208 includes a front camera and/or a rear camera. When the apparatus 1200 is in an operation mode, such as a shooting mode or a video mode, the front camera and/or the rear camera can receive external multimedia data. Each front camera and rear camera can be a fixed optical lens system or have focal length and optical zoom capabilities.

The audio component 1210 is configured to output and/or input audio signals. For example, the audio component 1210 includes a microphone ("MIC") configured to receive an external audio signal when the apparatus 1200 is in an operation mode, such as a call mode, a recording mode, and a voice recognition mode. The received audio signal may be further stored in the memory 1204 or transmitted via the communication component 1218. In some embodiments, the audio component 1210 further includes a speaker for outputting audio signals.

The I/O interface 1212 provides an interface between the processing component 1202 and peripheral interface modules, such as a keyboard, a click wheel, buttons, and the like. The buttons may include but are not limited to: home button, volume button, start button, and lock button.

The sensor component 1216 includes one or more sensors to provide status assessments of various aspects of the apparatus 1200. For instance, the sensor component 1216 may detect an open/closed status of the apparatus 1200, relative positioning of components, e.g., the display and the keypad, of the apparatus 1200, a change in position of the apparatus 1200 or a component of the apparatus 1200, a presence or absence of a target object contact with the apparatus 1200, an orientation or an acceleration/deceleration of the apparatus 1200, and a change in temperature of the apparatus 1200. The sensor component 1216 may include a proximity sensor configured to detect the presence of nearby objects without any physical contact. The sensor component 1216 may also include a light sensor, such as a CMOS or CCD image sensor, applicable for imaging applications. In some embodiments, the sensor component 1216 may also include an acceleration sensor, a gyroscope sensor, a magnetic sensor, a pressure sensor or a temperature sensor.

The communication component 1218 is configured to facilitate communication, wired or wirelessly, between the apparatus 1200 and other devices. The apparatus 1200 can access a wireless network based on a communication standard, such as WiFi, 2G, or 3G, or a combination thereof. In an exemplary embodiment, the communication component 1218 receives a broadcast signal or broadcast associated information from an external broadcast management system via a broadcast channel. In an exemplary embodiment, the communication component 1218 further includes a near field communication (NFC) module to facilitate short-range communications. For example, the NFC module may be implemented based on a radio frequency identity (RFID) technology, an infrared data association (IrDA) technology, an ultra-wideband (UWB) technology, a Bluetooth (BT) technology, and other technologies.

In exemplary embodiments, the apparatus 1200 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, to execute the frequency hopping processing method on the terminal side according to any of the above embodiments.

In exemplary embodiments, there is also provided a non-transitory computer readable storage medium such as a memory 1204 storing instructions, which may be executed by a processor 1220 of the apparatus 1200 to implement the frequency hopping processing method mentioned above. For example, the non-transitory readable storage medium may be a ROM, a RAM, a CD-ROM, a magnetic tape, a floppy disc, an optical data storage device, and the like.

Correspondingly, the present disclosure further provides a frequency hopping processing apparatus, including:
a processor; and
a memory, configured to store instructions executable by the processor;
wherein the processor is configured to execute the frequency hopping processing method on the base station side described above.

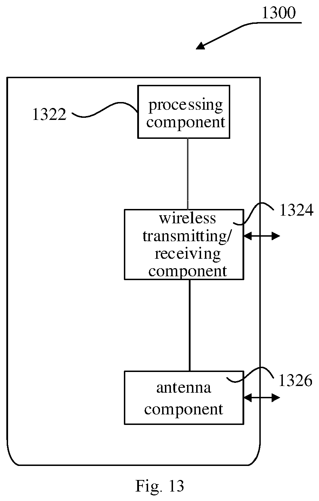

Fig. 13 is a block diagram of a frequency hopping processing apparatus 1300 according to an exemplary embodiment. For example, the apparatus 1300 may be provided as a base station. Referring to Fig. 13, the apparatus 1300 includes a processing component 1322, a wireless transmitting/receiving component 1324, an antenna component 1326, and a wireless interface specific signal processing portion. The processing component 1322 may further include at least one processor.

One of the processors in the processing component 1322 can be configured to perform any of the frequency hopping processing methods described above.

After considering the specification and practicing the disclosure disclosed herein, those skilled in the art will easily think of other embodiments of the present disclosure. This disclosure is intended to cover any variations, purposes, or adaptive changes of the present disclosure. These variations, purposes, or adaptive changes follow general principles of the present disclosure and include common knowledge or conventional technical means in the technical field not disclosed in the present disclosure. The description and the embodiments are only regarded as exemplary, and the true scope and spirit of the present disclosure are pointed out by the following claims.

It should be understood that the present disclosure is not limited to the precise structure that has been described above and illustrated in the drawings, and various modifications and changes can be made without departing from its scope. The scope of the present disclosure is only limited by the appended claims.

## Claims

1. A frequency hopping processing method, performed by a terminal, comprising:
receiving one or more first offsets configured by a base station for the terminal, wherein the first offset is an available frequency domain offset corresponding to two adjacent hops when the terminal transmits a physical uplink shared channel (PUSCH) using frequency hopping within a frequency domain resource range occupied by an uplink bandwidth part (BWP);
in a case where the two adjacent hops are in different time units in a time domain and frequency domain resources occupied meet a specified condition, determining a target offset of the two adjacent hops at least based on the one or more first offsets;
transmitting the PUSCH to the base station using frequency hopping in the different time units, based on the target offset.

2. The method of claim 1, wherein the specified condition comprises any one of:
the two adjacent hops respectively occupying frequency domain resources of an uplink subband and frequency domain resources of the uplink BWP; wherein the uplink subband is located within a first time unit in the time domain, and a transmission direction of information on the uplink subband is different from a transmission direction of information within the first time unit;
the two adjacent hops occupying the frequency domain resources of the uplink subband;
the two adjacent hops occupying the frequency domain resources of the uplink BWP.

3. The method of claim 2, further comprising:
receiving one or more second offsets configured by the base station for the terminal, wherein the second offset is an available frequency domain offset corresponding to two adjacent hops when the terminal transmits the PUSCH using frequency hopping within a frequency domain resource range occupied by the uplink subband.

4. The method of claim 3, wherein determining the target offset of the two adjacent hops at least based on the one or more first offsets comprises:
in response to determining that a latter hop of the two adjacent hops occupies the frequency domain resources of the uplink subband, determining one of the one or more second offsets as the target offset based on a protocol agreement; or
determining a second offset scheduled by the base station as the target offset.

5. The method of claim 3, wherein determining the target offset of the two adjacent hops at least based on the one or more first offsets comprises:
in response to determining that a latter hop of the two adjacent hops occupies the frequency domain resources of the uplink BWP, determining one of the one or more first offsets as the target offset based on a protocol agreement; or
determining a first offset scheduled by the base station as the target offset.

6. The method of claim 2, wherein the one or more first offsets are configured by the base station for the terminal based on a first number of resource blocks occupied by the uplink subband.

7. The method of claim 6, wherein determining the target offset of the two adjacent hops at least based on the one or more first offsets comprises:
determining one of the one or more first offsets as the target offset based on a protocol agreement; or
determining a first offset scheduled by the base station as the target offset.

8. The method of claim 2, wherein the one or more first offsets are configured by the base station for the terminal based on a second number of resource blocks occupied by the uplink BWP.

9. The method of claim 8, wherein determining the target offset of the two adjacent hops at least based on the one or more first offsets comprises:
determining a specified offset scheduled by the base station for the terminal as the target offset; wherein the specified offset is one offset scheduled by the base station for the terminal in the one or more first offsets based on a first number of resource blocks occupied by the uplink subband.

10. The method of claim 8, wherein determining the target offset of the two adjacent hops at least based on the one or more first offsets comprises:
determining a candidate offset in the one or more first offsets based on a protocol agreement or a scheduling of the base station;
in response to determining that a latter hop of the two adjacent hops occupies the frequency domain resources of the uplink BWP, determining the candidate offset as the target offset;
in response to determining that a latter hop of the two adjacent hops occupies the frequency domain resources of the uplink subband, determining the target offset based on the candidate offset; wherein the target offset is a frequency domain offset that enables all frequency domain resources occupied by the latter hop to be within the frequency domain resource range occupied by the uplink subband.

11. A frequency hopping processing method, performed by a base station, comprising:
configuring one or more first offsets for a terminal, wherein the first offset is an available frequency domain offset corresponding to two adjacent hops when the terminal transmits a physical uplink shared channel (PUSCH) using frequency hopping within a frequency domain resource range occupied by an uplink bandwidth part (BWP);
in a case where the two adjacent hops are in different time units in a time domain and frequency domain resources occupied meet a specified condition, determining a target offset of the two adjacent hops at least based on the one or more first offsets;
receiving the PUSCH transmitted by the terminal using frequency hopping in the different time units, based on the target offset.

12. The method of claim 11, wherein the specified condition comprises any one of:
the two adjacent hops respectively occupying frequency domain resources of an uplink subband and frequency domain resources of the uplink BWP; wherein the uplink subband is located within a first time unit in the time domain, and a transmission direction of information on the uplink subband is different from a transmission direction of information within the first time unit;
the two adjacent hops occupying the frequency domain resources of the uplink subband;
the two adjacent hops occupying the frequency domain resources of the uplink BWP.

13. The method of claim 12, further comprising:
configuring one or more second offsets for the terminal, wherein the second offset is an available frequency domain offset corresponding to two adjacent hops when the terminal transmits the PUSCH using frequency hopping within a frequency domain resource range occupied by the uplink subband.

14. The method of claim 13, wherein determining the target offset of the two adjacent hops at least based on the one or more first offsets comprises:
in response to determining that a latter hop of the two adjacent hops occupies the frequency domain resources of the uplink subband, determining one of the one or more second offsets as the target offset based on a protocol agreement; or
determining a second offset scheduled by the base station for the terminal as the target offset.

15. The method of claim 13, wherein determining the target offset of the two adjacent hops at least based on the one or more first offsets comprises:
in response to determining that a latter hop of the two adjacent hops occupies the frequency domain resources of the uplink BWP, determining one of the one or more first offsets as the target offset based on a protocol agreement; or
determining a first offset scheduled by the base station for the terminal as the target offset.

16. The method of claim 12, wherein configuring one or more first offsets for the terminal comprises:
configuring one or more first offsets for the terminal based on a first number of resource blocks occupied by the uplink subband.

17. The method of claim 16, wherein determining the target offset of the two adjacent hops at least based on the one or more first offsets comprises:
determining one of the one or more first offsets as the target offset based on a protocol agreement; or
determining a first offset scheduled by the base station for the terminal as the target offset.

18. The method of claim 12, wherein configuring one or more first offsets for the terminal comprises:
configuring one or more first offsets for the terminal based on a second number of resource blocks occupied by the uplink BWP.

19. The method of claim 18, further comprising:
scheduling a specified offset for the terminal in the one or more first offsets based on a first number of resource blocks occupied by the uplink subband;
determining the target offset of the two adjacent hops at least based on the one or more first offsets comprises:
determining the specified offset as the target offset.

20. The method of claim 18, wherein determining the target offset of the two adjacent hops at least based on the one or more first offsets comprises:
determining a candidate offset in the one or more first offsets based on a protocol agreement or a scheduling of the base station;
in response to determining that a latter hop of the two adjacent hops occupies the frequency domain resources of the uplink BWP, determining the candidate offset as the target offset;
in response to determining that a latter hop of the two adjacent hops occupies the frequency domain resources of the uplink subband, determining the target offset based on the candidate offset; wherein the target offset is a frequency domain offset that enables all frequency domain resources occupied by the latter hop to be within the frequency domain resource range occupied by the uplink subband.

21. A frequency hopping processing apparatus, applied in a terminal, comprising:
a first receiving module, configured to receive one or more first offsets configured by a base station for the terminal, wherein the first offset is an available frequency domain offset corresponding to two adjacent hops when the terminal transmits a physical uplink shared channel (PUSCH) using frequency hopping within a frequency domain resource range occupied by an uplink bandwidth part (BWP);
a first frequency hopping processing module, configured to, in a case where the two adjacent hops are in different time units in a time domain and frequency domain resources occupied meet a specified condition, determine a target offset of the two adjacent hops at least based on the one or more first offsets;
a sending module, configured to transmit the PUSCH to the base station using frequency hopping in the different time units, based on the target offset.

22. A frequency hopping processing apparatus, applied in a base station, comprising:
an executing module, configured to configure one or more first offsets for a terminal, wherein the first offset is an available frequency domain offset corresponding to two adjacent hops when the terminal transmits a physical uplink shared channel (PUSCH) using frequency hopping within a frequency domain resource range occupied by an uplink bandwidth part (BWP);
a second frequency hopping processing module, configured to, in a case where the two adjacent hops are in different time units in a time domain and frequency domain resources occupied meet a specified condition, determine a target offset of the two adjacent hops at least based on the one or more first offsets;
a second receiving module, configured to receive the PUSCH transmitted by the terminal using frequency hopping in the different time units, based on the target offset.

23. A frequency hopping processing apparatus, comprising:
a processor; and
a memory, configured to store instructions executable by the processor;
wherein the processor is configured to execute the method according to any of claims 1-10.

24. A frequency hopping processing apparatus, comprising:
a processor; and
a memory, configured to store instructions executable by the processor;
wherein the processor is configured to execute the method according to any of claims 11-20.
